# EUROPÄISCHE PATENTSCHRIFT

(11) **EP 4 335 738 B1**
(45) Veröffentlichungstag und Bekanntmachung des Hinweises auf die Patenterteilung: **07.10.2026**
(21) Anmeldenummer: 23192442.4
(22) Anmeldetag: 21.08.2023
(51) Int. Cl.: B62K 23/06, B62L 3/02

(54) **HYDRAULISCHE BREMSANORDNUNG FÜR EIN WENIGSTENS TEILWEISE MUSKELBETRIEBENES FAHRRAD UND VERFAHREN ZUR HERSTELLUNG EINER BREMSANORDNUNG**
HYDRAULIC BRAKE ASSEMBLY FOR AN AT LEAST PARTIALLY MUSCLE OPERATED BICYCLE AND METHOD FOR PRODUCING A BRAKE ASSEMBLY
ENSEMBLE FREIN HYDRAULIQUE POUR BICYCLETTE ENTRAÎNÉE AU MOINS PARTIELLEMENT PAR LA FORCE MUSCULAIRE ET PROCÉDÉ DE FABRICATION D'UN ENSEMBLE FREIN

(30) Priorität: 22.08.2022 DE 102022121164
(43) Veröffentlichungstag der Anmeldung: 13.03.2024
(73) Patentinhaber: Trickstuff GmbH, 79292 Pfaffenweiler (DE)
(72) Erfinder: Duscheleit, Moritz, 79108 Freiburg (DE); Schedel, Christoph, 79098 Freiburg (DE)
(74) Vertreter: BSB Patentanwälte Schütte & Engelen Partnerschaft mbB

(56) Entgegenhaltungen:
- DE-A1- 102020 128 142
- DE-U1- 202017 001 931
- US-B2- 7 578 375
- US-B2- 9 963 192

## Beschreibung

Die vorliegende Erfindung betrifft eine hydraulische Bremsanordnung für ein wenigstens teilweise muskelbetriebenes Fahrrad und umfasst wenigstens eine Gebereinheit, welche mit einer Nehmereinheit fluidisch verbindbar ist. Die Gebereinheit weist einen Bremshebel und ein Zylindergehäuse mit einem Zylinderraum und eine in dem Zylinderraum verschiebbar aufgenommene Kolbeneinheit auf.

Hydraulische Scheibenbremsen für Fahrräder bieten auch bei schnellen Fahrten und beispielsweise im Radsportbereich bei Rennrädern oder Mountainbikes ein sicheres Bremsen. Zudem können damit auch Elektrofahrräder oder Stadträder sicher gebremst werden.

Das Dokument DE 20 2017 001931 U1 offenbart eine gattungsgemäße hydraulische Bremsanordnung.

In der Regel können hydraulische Fahrradbremsen hohe Bremsmomente erzeugen. Daher ist es wichtig, dass die Gebereinheit möglichst feinfühlig betätigt werden kann, um die Bremswirkung optimal dosieren zu können und ein unerwünschtes Blockieren der Räder zu vermeiden.

Eine entscheidende Rolle für das Ansprechverhalten der Fahrradbremse spielt der sog. Totweg. Der Totweg entspricht dem Weg, den die Kolbeneinheit im Zylinderraum zurücklegen muss, bis die Bremse erstmalig Druck aufbaut. Besonders bei Sportfahrrädern wird ein möglichst kurzer Totweg gewünscht, sodass die Bremse beim Ziehen am Bremshebel möglichst schnell und direkt anspricht. Daher muss eine genaue Dosierung der Bremsleistung über einen besonders kurzen Betätigungsweg möglich sein.

Allerdings ist es mit Blick auf die Betriebssicherheit und Haltbarkeit der Fahrradbremse von Nachteil, wenn der Totweg zu kurz bemessen ist. Es hat sich gezeigt, dass ein zu kurzer Totweg zu einem erhöhten Verschleiß oder bei bestimmten Lastfällen sogar zu einer Zerstörung der Kolbendichtung führen kann.

Daher ergeben sich für sämtliche Bauteile, die den Totweg unbeabsichtigt verkleinern oder auch vergrößern könnten, extrem geringe Toleranzen. Zugleich dürfen diese geringen Toleranzen auch während des oft harten Betriebs der Fahrradbremse (beispielsweise bei einem Mountainbike) nicht wesentlich größer werden. Denn sonst kann die Bremsleistung nicht mehr zuverlässig dosiert werden und es könnte zu Stürzen kommen.

Insgesamt ergeben sich aus konstruktiver Sicht hohe Anforderungen an die Präzision der einzelnen Bauteile. Das führt regelmäßig zu einem komplizierten konstruktiven Aufbau der Gebereinheit. Solche Konstruktionen erweisen sich dann als störanfällig und bringen oft einen sehr hohen Wartungsaufwand mit sich. Aber gerade bei Sportfahrrädern spielen Zuverlässigkeit und die Fähigkeit zur schnellen Wartung eine große Rolle. Zudem führen aufwendige Konstruktionen auch zu einem erhöhten Kostenaufwand. Ergänzend zu den zuvor genannten Anforderungen sollten solche Bremsen auch möglichst leicht gebaut sein, um das Gesamtgewicht des Fahrrads nicht unnötig zu erhöhen.

Demgegenüber ist es die Aufgabe der vorliegenden Erfindung, eine verbesserte hydraulische Bremsanordnung zur Verfügung zu stellen, welche die zuvor diskutierten Anforderungen möglichst weitgehend erfüllt.

Diese Aufgabe wird gelöst durch eine Bremsanordnung mit den Merkmalen des Anspruchs 1 und durch ein Verfahren mit den Merkmalen des Anspruchs 20. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels.

Die erfindungsgemäße hydraulische Bremsanordnung ist für ein wenigstens teilweise muskelbetriebenes Fahrrad vorgesehen. Die Bremsanordnung umfasst wenigstens eine Gebereinheit, welche mit einer Nehmereinheit fluidisch verbindbar ist. Die Bremsanordnung kann wenigstens eine Nehmereinheit umfassen. Die Gebereinheit umfasst einen Bremshebel und ein Zylindergehäuse mit einem Zylinderraum. Die Gebereinheit umfasst eine in dem Zylinderraum verschiebbar aufgenommene Kolbeneinheit. Der Bremshebel ist mittels einer Betätigungsmechanik mit der Kolbeneinheit wirkverbunden. Insbesondere drückt die Betätigungsmechanik auf die Kolbeneinheit, wenn der Bremshebel betätigt wird. Insbesondere ist der Bremshebel (wenigstens in eine Kraftrichtung) an die Kolbeneinheit gekoppelt. Insbesondere derart, dass die Kolbeneinheit durch eine Betätigung des Bremshebels im Zylinderraum verschiebbar ist. Das Zylindergehäuse weist ein hebelseitiges Ende und ein nehmerseitiges Ende auf. An dem nehmerseitigen Ende ist eine Anschlussöffnung zum Koppeln einer (mit der Nehmereinheit fluidisch verbindbaren) Leitungseinrichtung (in dem Zylindergehäuse) ausgebildet. An dem hebelseitigen Ende ist eine Verbindungsöffnung ausgebildet, durch welche sich die Betätigungsmechanik in den Zylinderraum zur Kolbeneinheit erstreckt. Dabei ist die Verbindungsöffnung in einer quer zu einer Längsachse des Zylinderraums verlaufenden Stützwand ausgebildet. Die Kolbeneinheit ist (nur) durch die Anschlussöffnung in den Zylinderraum einsetzbar (beispielsweise im Rahmen einer Montage der Bremsanordnung).

Die erfindungsgemäße Bremsanordnung bietet viele Vorteile.

Die Stützwand ist insbesondere unlösbar und vorzugsweise einstückig mit dem Zylindergehäuse verbunden. Ein erheblicher Vorteil ist es dann, dass die Verbindungsöffnung in einer einstückig mit dem Zylindergehäuse ausgebildeten Stützwand angeordnet ist. Dadurch können die zuvor diskutierten Anforderungen besonders zuverlässig und zugleich mit besonders geringem konstruktiven Aufwand erfüllt werden. Beispielsweise können mit einer solchen Stützwand besonders geringe Toleranzen für den Totweg erzielt werden. Zugleich wird eine erhebliche Verbesserung der Stabilität erreicht, beispielsweise wenn der Bremshebel bei einem Sturz in eine Richtung gezogen wird, welche der bestimmungsgemäßen Betätigungsrichtung entgegengesetzt ist. Insbesondere bestehen die Stützwand und das Zylindergehäuse aus einem gemeinsamen (durchgängigen) Werkstoffgefüge. Einstückig kann hier insbesondere auch als werkstoffeinstückig bezeichnet werden.

In allen Ausgestaltungen bietet auch der Einbau der Kolbeneinheit durch die Anschlussöffnung bzw. von vorne einen besonderen Vorteil. Dadurch wird in Kombination mit der festen Stützwand eine besonders einfache Montage der Gebereinheit ermöglicht. Zugleich kann auf eine komplexe Konstruktion des Kolbens bzw. des Zylindergehäuses mit zahlreichen Bauteilen verzichtet werden. Beispielsweise kann auf den sonst regelmäßig verwendeten Sprengring verzichtet werden, welcher den Kolben in der Bohrung sichert. Zudem kann die Gebereinheit dadurch besonders einfach gewartet werden. Beispielsweise kann bei der Erfindung ein Kolbenwechsel und Dichtungswechsel innerhalb weniger Minuten oder sogar unterhalb 1 Minute erfolgen. Ein weiterer Vorteil der Anschlussöffnung ist, dass dadurch auch eine sehr präzise und zugleich unaufwendige Herstellung bzw. Bearbeitung der Stützwand möglich ist.

Insbesondere begrenzt die Stützwand die Bewegbarkeit der Kolbeneinheit am hebelseitigen Ende. Insbesondere definiert die Stützwand eine Ruheposition der Kolbeneinheit. Insbesondere stellt die Stützwand ein Widerlager für die Kolbeneinheit in der Ruheposition bereit. Insbesondere liegt die Kolbeneinheit (vorzugsweise mittelbar über den Pleuel und insbesondere den Pleuelkopf) an der Stützwand an, wenn die Kolbeneinheit an einem hebelseitigen Ende ihrer Bewegbarkeit bzw. Betätigungswegs angekommen ist. Insbesondere ist die Ruheposition dadurch definiert, dass die Kolbeneinheit an der Stützwand anliegt. Insbesondere ist die Gebereinheit in der Ruheposition nicht betätigt. Insbesondere begrenzt die Stützwand den Zylinderraum am hebelseitigen Ende. Insbesondere verschließt die Stützwand den Zylinderraum am hebelseitigen Ende außerhalb der Verbindungsöffnung vollständig.

Vorzugsweise weist die Anschlussöffnung einen minimalen Durchmesser auf, welcher gleich oder größer als ein maximaler Durchmesser einer Querschnittsgeometrie der Kolbeneinheit ist. Die Querschnittsgeometrie bezieht sich insbesondere auf einen Querschnitt durch die Kolbeneinheit quer zu ihrer Längsachse. Insbesondere sind die Durchmesser so aufeinander abgestimmt, dass die Kolbeneinheit durch die Anschlussöffnung in das Zylindergehäuse einführbar ist. Der minimale Durchmesser kann auch als eine lichte Weite der Anschlussöffnung bezeichnet werden. Insbesondere weist die Anschlussöffnung einen minimalen Durchmesser auf, welcher gleich oder größer als ein minimaler Durchmesser des Zylinderraums ist. Insbesondere ist die Anschlussöffnung mittels Materialabtrag vom Zylindergehäuse hergestellt.

Die Anschlussöffnung ist vorzugsweise mit wenigstens einer Fase ausgestattet. Vorzugsweise ist die Fase dazu geeignet und ausgebildet, eine an am Kolben montierte Kolbendichtungseinrichtung beim Einschieben der Kolbeneinheit in die Anschlussöffnung zu schützen und insbesondere zusammenzudrücken. Insbesondere ist die Fase an einem nehmerseitigen Ende des Zylinderraums angeordnet. Beispielsweise befindet sich die Fase am nehmerseitigen Ende einer Lauffläche für die Kolbeneinheit (sog. Zylinderlauffläche). Die Fase ist insbesondere an einem Übergang von einem ersten auf einen zweiten Durchmesser der Anschlussöffnung angeordnet, wobei der erste Durchmesser kleiner als der zweite Durchmesser ist. Insbesondere ist der erste Durchmesser der minimale Durchmesser der Anschlussöffnung und entspricht vorzugsweise dem Durchmesser des Zylinderraums. Insbesondere ist die Fase einstückig mit dem Zylindergehäuse ausgebildet.

Vorzugsweise weist die Verbindungsöffnung einen minimalen Durchmesser auf, welcher kleiner als ein maximaler Durchmesser einer Querschnittsgeometrie der Kolbeneinheit ist. Insbesondere kann die Kolbeneinheit dadurch nicht durch die Verbindungsöffnung hindurchtreten. Insbesondere ist die Kolbeneinheit nicht durch die Verbindungsöffnung in das Zylindergehäuse einsetzbar. Insbesondere kann die Kolbeneinheit ausschließlich durch die Anschlussöffnung in den Zylinderraum eingesetzt werden.

Vorzugsweise weist die Verbindungsöffnung einen minimalen Durchmesser auf, welcher kleiner als ein maximaler Durchmesser einer Querschnittsgeometrie eines innerhalb des Zylindergehäuses liegenden Teils der Betätigungsmechanik ist. Insbesondere kann die Betätigungsmechanik dadurch nicht vollständig durch die Verbindungsöffnung aus dem Zylindergehäuse entfernt werden. Insbesondere ist die Betätigungsmechanik nur durch die Anschlussöffnung in das Zylindergehäuse einsetzbar. Insbesondere ist der minimale Durchmesser der Verbindungsöffnung kleiner als eine lichte Weite des Zylindergehäuses bzw. als ein Durchmesser des Zylinderraums.

Die Betätigungsmechanik umfasst insbesondere wenigstens einen Pleuel mit einer Pleuelstange und einem Pleuelkopf. Insbesondere ist der Pleuelkopf fest mit der Pleuelstange verbunden. Insbesondere ist der Pleuel einstückig ausgebildet. Insbesondere ist die Kolbeneinheit über die Betätigungsmechanik mit dem Bremshebel wirkverbunden, sodass die Kolbeneinheit infolge einer Betätigung der Gebereinheit im Zylinderraum verschoben wird. Die Gebereinheit wird insbesondere am Bremshebel betätigt.

Insbesondere weist die Verbindungsöffnung einen minimalen Durchmesser auf, welcher kleiner als ein maximaler Durchmesser einer Querschnittsgeometrie des Pleuels und vorzugsweise des Pleuelkopfes ist. Insbesondere ist ein maximaler Durchmesser der Pleuelstange kleiner als ein minimaler Durchmesser der Verbindungsöffnung. Insbesondere stellt die Pleuelstange denjenigen Teil der Betätigungsmechanik bereit, welcher sich durch die Verbindungsöffnung hindurch in den Zylinderraum erstreckt. Insbesondere ist der Pleuelkopf vollständig im Zylinderraum angeordnet. Möglich ist aber auch, dass der Pleuelkopf die Verbindungsöffnung passieren kann.

Die Kolbeneinheit ist vorzugsweise über ihre gesamte axiale Länge radial vom Zylindergehäuse umschlossen. Insbesondere umschließt das Zylindergehäuse die Kolbeneinheit entlang des gesamten Betätigungswegs radial.

In einer besonders vorteilhaften und bevorzugten Ausführung ist das Zylindergehäuse einstückig mit einer Hebelaufnahme verbunden. Insbesondere ist der Bremshebel an der Hebelaufnahme (um eine Bremshebelschwenkachse) schwenkbar gelagert. Mit einem derart konstruierten Zylindergehäuse kommen die Vorteile der einstückig mit dem Zylindergehäuse verbundenen Stützwand besonders gut zur Geltung. Wie nachfolgend noch näher beschrieben, sind Zylindergehäuse und Hebelaufnahme vorzugsweise in den Basiskörper integriert.

In allen Ausgestaltungen ist es besonders vorteilhaft und bevorzugt, dass das Zylindergehäuse integraler Bestandteil eines Basiskörpers der Gebereinheit ist. Insbesondere ist das Zylindergehäuse einstückig mit dem Basiskörper verbunden. Insbesondere ist eine Zylinderwandung, welche den Zylinderraum radial umschließt, einstückig mit dem Basiskörper verbunden. Dadurch ergeben sich viele Vorteile hinsichtlich der Toleranzen für den Totweg und für die Wartung sowie für die Stabilität der Gebereinheit. Insbesondere ist das Zylindergehäuse einstückig ausgebildet. Im Rahmen der vorliegenden Erfindung wird unter einem integralen Bestandteil insbesondere verstanden, dass der Bestandteil fest und unlösbar und insbesondere über ein durchgehendes (einheitliches) Werkstoffgefüge angebunden ist.

Der Zylinderraum wird vorzugsweise durch wenigstens eine Ausnehmung im Basiskörper bereitgestellt. Insbesondere ist der Zylinderraum mittels Materialabtrag vom Basiskörper hergestellt.

Insbesondere ist der Zylinderraum als ein länglicher (vorzugsweise zylindrischer) Raum und bevorzugt als eine Bohrung ausgebildet. Im Rahmen der vorliegenden Erfindung kann eine Bohrung mittels Bohren oder mittels eines anderen geeigneten Verfahrens und beispielsweise Fräsen oder dergleichen hergestellt werden. Es ist möglich und vorteilhaft, dass nachträglich wenigstens ein weiteres Bearbeitungsverfahren erfolgt, z. B. Honen, Polieren, Schleifen und/oder Eloxieren oder ein anderes Beschichten.

In dem Zylindergehäuse ist vorzugsweise wenigstens eine Ausgleichsbohrung angeordnet. Insbesondere ist die Ausgleichsbohrung in einer Zylinderwandung angeordnet. Die Ausgleichsbohrung kann auch als Schnüffelbohrung bezeichnet werden. Insbesondere verbindet die Ausgleichsbohrung den Zylinderraum (insbesondere einen Druckraum, welcher einen Teil des Zylinderraums bildet) mit einem Behälterraum einer Ausgleichsbehältereinrichtung. Insbesondere wird unter der Ausgleichsbohrung eine kanalartige Durchgangsöffnung verstanden, welche nicht zwangsläufig durch Bohren entstanden sein muss. Im Rahmen der vorliegenden Erfindung können die Begriffe "Ausgleichsbohrung" und "kanalartige Durchgangsöffnung" vorzugsweise synonym verwendet werden.

In allen Ausgestaltungen ist es besonders bevorzugt, dass ein Abstand zwischen der Ausgleichsbohrung und der Stützwand fest (unveränderlich) in einen Werkstoff des Zylindergehäuses eingearbeitet ist. Vorzugsweise ist der Abstand fest in den Werkstoff des Basiskörpers eingearbeitet. Insbesondere ist der Abstand nicht durch einen Austausch von Bauteilen veränderbar. Eine solche konstruktive Integration von Ausgleichsbohrung und Stützwand in das Zylindergehäuse bzw. den Basiskörper bietet viele Vorteile. So werden unerwünschte Veränderungen des Abstands zum Beispiel durch Toleranzen von Bauteilen (beispielsweise Sicherungsringe, Scheiben etc.) oder durch Herstellungstoleranzen (z. B. Fräsen von Nuten für Sicherungsringe) zuverlässig vermieden. Zugleich ist dadurch eine besonders unaufwendig umsetzbare Einhaltung des Abstands möglich. Beispielsweise kann der Abstand direkt bei der Fertigung und beispielsweise der Zerspanung des Basiskörpers dauerhaft und unabhängig von Folgetoleranzen festgelegt werden. Da dieser Abstand entscheidend für den Totweg ist, kann dadurch auch der Totweg mit besonders geringeren Toleranzen festgelegt werden. Insbesondere ist der Totweg nicht einstellbar.

Die Pleuelstange erstreckt sich vorzugsweise durch die Verbindungsöffnung hindurch in den Zylinderraum. Insbesondere ist der Pleuelkopf im Zylinderraum zwischen der Stützwand und der Kolbeneinheit angeordnet. Mit einem solchen Pleuel in Kombination mit der Stützwand kann der Totweg besonders zuverlässig festgelegt werden. Zudem wird dadurch wirkungsvoll verhindert, dass ein unerwünschtes Spiel am Bremshebel spürbar ist, wenn dieser aus einer Ruheposition heraus betätigt wird. Möglich ist aber auch, dass die Kolbeneinheit direkt an der Stützwand anliegt und dass darüber der Totweg festgelegt wird.

Insbesondere weist der Pleuelkopf eine Querschnittsgeometrie auf, deren maximaler Durchmesser größer als der minimale Durchmesser der Verbindungsöffnung ist. Insbesondere ist der Pleuelkopf größer als die Verbindungsöffnung. Insbesondere kann der Pleuelkopf nur durch die Anschlussöffnung in den Zylinderraum eingesetzt werden. Insbesondere weist die Verbindungsöffnung einen minimalen Durchmesser auf, welcher gleich oder größer als ein maximaler Durchmesser einer Querschnittsgeometrie der Pleuelstange ist.

Es ist bevorzugt und vorteilhaft, dass die Stützwand einen mit dem Pleuelkopf geometrisch korrespondierenden Kontaktabschnitt aufweist. Vorzugsweise ist der Kontaktabschnitt konkav ausgebildet. Vorzugsweise ist der Pleuelkopf wenigstens abschnittsweise konvex und besonders bevorzugt kugelartig ausgebildet. Insbesondere stellt der Kontaktabschnitt wenigstens näherungsweise eine Negativform des Pleuelkopfs dar. Insbesondere liegt der Kontaktabschnitt auf der dem Zylinderraum zugewandten Seite der Stützwand. Das ermöglicht eine besonders präzise Festlegung des Totwegs. Insbesondere liegt der Pleuelkopf direkt berührend an dem Kontaktabschnitt an. Insbesondere sind zwischen Pleuelkopf und Kontaktabschnitt keine weiteren Bauteile vorgesehen.

Insbesondere ist die Kolbeneinheit mittels wenigstens eines Vorspannelements in eine Ruheposition vorspannbar. Vorzugsweise drückt das Vorspannelement den Pleuelkopf gegen die Stützwand und insbesondere gegen den Kontaktabschnitt. Das ermöglicht eine sehr präzise und zugleich unaufwendig herstellbare Festlegung der Ruheposition. Das ist zum Beispiel erheblich vorteilhafter als die Verwendung von Sprengringen, welche in entsprechenden Nuten eingesetzt werden. Denn sowohl durch den Sprengring als auch durch die Nut ergeben sich unerwünschte Toleranzen. Zudem kann bei der Erfindung eine abdichtende Wirkung zwischen Pleuelkopf und Kontaktabschnitt vorteilhaft genutzt werden.

Insbesondere bringt das Vorspannelement die Kolbeneinheit aus einer betätigten Position zurück in die Ruheposition. Insbesondere umfasst das Vorspannelement wenigstens eine Feder oder ist als eine solche ausgebildet. Insbesondere drückt das Vorspannelement die Kolbeneinheit in Richtung des hebelseitigen Endes des Zylindergehäuses. Insbesondere stützt sich das Vorspannelement an einer Anschlusseinheit ab, welche in die Anschlussöffnung einschraubbar ist. Insbesondere ist das Vorspannelement (nur) durch die Anschlussöffnung in den Zylinderraum einsetzbar.

In einer vorteilhaften Weiterbildung ist die Pleuelstange außerhalb des Zylinderraums in einem von einem Basiskörper der Gebereinheit wenigstens teilweise umschlossenen Aufnahmeraum angeordnet. Insbesondere ist die Pleuelstange im Aufnahmeraum an den Bremshebel (in wenigstens eine Kraftrichtung) gekoppelt (insbesondere mittels eines Nockenkörpers). Insbesondere erstreckt sich die Pleuelstange vom Zylinderraum aus durch die Verbindungsöffnung in den Aufnahmeraum hinein. Insbesondere ist die Stützwand zwischen Aufnahmeraum und Zylinderraum angeordnet.

Insbesondere ist der Aufnahmeraum im Basiskörper ausgebildet. Insbesondere ist der Aufnahmeraum integraler Bestandteil des Basiskörpers. Vorzugsweise ist der Aufnahmeraum in den Basiskörper eingearbeitet. Insbesondere wird der Aufnahmeraum durch eine Ausnehmung im Basiskörper bereitgestellt. Insbesondere wird der Aufnahmeraum mittels Materialabtrag vom Basiskörper hergestellt. Insbesondere mündet eine Belüftungsöffnung in den Aufnahmeraum. Insbesondere dient die Belüftungsöffnung zum Druckausgleich zwischen einem Behälterraum einer Ausgleichsbehältereinrichtung und der Atmosphäre. Der Aufnahmeraum hat insbesondere Zugang zur Atmosphäre. Insbesondere ist der Aufnahmeraum teilweise offen ausgebildet. Insbesondere weist der Aufnahmeraum wenigstens eine Öffnung auf, durch welche sich der Nockenkörper zum Bremshebel erstreckt und/oder durch welche sich der Bremshebel zum Nockenkörper erstreckt oder durch welche sich der Bremshebel zum Pleuel erstreckt.

Insbesondere ist der Bremshebel um eine Bremshebelschwenkachse schwenkbar gelagert. Insbesondere ist die Bremshebelschwenkachse seitlich neben einer gedachten Verlängerung des Zylinderraums angeordnet. Dadurch kann der Pleuel, welcher sich aus dem Zylinderraum heraus in den Aufnahmeraum erstreckt, besonders einfach im Rahmen der Montage mit der übrigen Betätigungsmechanik und beispielsweise mit dem Nockenkörper oder dem Bremshebel verbunden werden.

Insbesondere umfasst die Betätigungsmechanik wenigstens einen Nockenkörper. Insbesondere ist der Pleuel (mit seiner Pleuelstange) um eine Pleuelschwenkachse schwenkbar am Nockenkörper angebunden. Der Nockenkörper ist insbesondere mittels einer Nockenschwenkachse schwenkbar an der Hebelaufnahme angebunden. Insbesondere sind der Pleuel und der Nockenkörper relativ zueinander schwenkbar. Insbesondere sind die Bremshebelschwenkachse und die Nockenschwenkachse identisch.

Insbesondere haben der Bremshebel und der Nockenkörper eine gemeinsame Lagerstelle an der Hebelaufnahme. Insbesondere verläuft die Pleuelschwenkachse durch den Nockenkörper.

Es ist möglich und vorteilhaft, dass der Nockenkörper und der Bremshebel fest miteinander verbunden sind. Dann sind der Nockenkörper und der Bremshebel insbesondere nur gemeinsam bewegbar. Beispielsweise können der Nockenkörper und der Bremshebel einstückig miteinander verbunden sein. Der Nockenkörper und der Bremshebel können auch als separate Bauteile ausgebildet sein. Es ist auch möglich und vorteilhaft, dass der Nockenkörper und der Bremshebel relativ zueinander bewegbar sind. Vorzugsweise sind der Nockenkörper und der Bremshebel dann um eine gemeinsame Schwenkachse unabhängig voneinander schwenkbar.

Es ist bevorzugt und vorteilhaft, dass der Verbindungsöffnung auf ihrer vom Zylinderraum abgewandten Seite wenigstens ein Dichtungselement vorgelagert ist. Insbesondere erstreckt sich die Pleuelstange durch das Dichtungselement. Das Dichtungselement ist insbesondere als eine Dichtungsscheibe mit einer (zentralen) Öffnung ausgebildet. Das Dichtungselement verhindert vorzugsweise ein Eindringen von Schmutz durch die Verbindungsöffnung in den Zylinderraum.

Insbesondere ist das Dichtungselement beabstandet von der Stützwand angeordnet. Insbesondere ist das Dichtungselement im Aufnahmeraum angeordnet. Das Dichtungselement verbleibt insbesondere ortsfest, wenn sich die Pleuelstange bewegt. Insbesondere ist das Dichtungselement an dem Zylindergehäuse befestigt. Insbesondere ist das Dichtungselement in einer ringförmigen Nut aufgenommen. Insbesondere ist die ringförmige Nut mittels Materialabtrag vom Zylindergehäuse hergestellt.

In einer vorteilhaften Weiterbildung sind die Anschlussöffnung und die Verbindungsöffnung und der Zylinderraum und die Kolbeneinheit auf einer gemeinsamen Längsachse angeordnet. Das ermöglicht eine besonders kompakte und stabile Umsetzung der Erfindung.

Die Anschlussöffnung ist vorzugsweise mit wenigstens einer Anschlusseinheit zur Anbindung einer Leitungseinrichtung koppelbar. Insbesondere ist die Anschlusseinheit in das Zylindergehäuse einschraubbar. Insbesondere ist das Zylindergehäuse dazu am nehmerseitigen Ende mit einem Gewinde ausgestattet. Es ist bevorzugt und vorteilhaft, dass die Anschlussöffnung nur (ausschließlich) durch die (eingeschraubte) Anschlusseinheit so verengt wird, dass die Kolbeneinheit nicht mehr durch die Anschlussöffnung aus dem Zylinderraum heraustreten kann. Das ermöglicht eine besonders einfache Herstellung bzw. Montage und eine konstruktiv unaufwendige Umsetzung der Erfindung. Zum Beispiel kann die Lauffläche für die Kolbeneinheit (sog. Zylinderlauffläche) bzw. die Zylinderrauminnenwand dadurch besonders einfach und zugleich präzise bearbeitet werden, wodurch das Ansprechverhalten der Bremse insgesamt weiter verbessert wird.

Insbesondere verengt die Anschlusseinheit die Anschlussöffnung mit dem Abschnitt, mit welchem sie in die Anschlussöffnung eingeschraubt ist. Insbesondere ist die (eingeschraubte) Anschlusseinheit wenigstens abschnittsweise radial innerhalb des Zylindergehäuses angeordnet. Insbesondere sind die Anschlusseinheit und das Zylindergehäuse abschnittsweise koaxial angeordnet. Dabei ist die Anschlusseinheit insbesondere radial innen und das Zylindergehäuse radial außen. Vorzugsweise verschließt die Anschlusseinheit die Anschlussöffnung nach außen fluiddicht.

Es ist möglich und vorteilhaft, dass die Anschlusseinheit einen Stützkragen aufweist, an welchem sich das Vorspannelement abstützt. Insbesondere ist der Stützkragen an einer Innenseite der Anschlusseinheit angeordnet. Insbesondere ist zwischen der Anschlusseinheit und dem Zylindergehäuse wenigstens eine Dichtung angeordnet.

Das erfindungsgemäße Verfahren dient zur Herstellung einer hydraulischen Bremsanordnung für ein wenigstens teilweise muskelbetriebenes Fahrrad. Die hergestellte Bremsanordnung umfasst eine Gebereinheit, welche fluidisch mit einer Nehmereinheit verbindbar ist. Die Gebereinheit umfasst einen Bremshebel und ein Zylindergehäuse mit einem Zylinderraum und eine in dem Zylinderraum verschiebbar aufgenommene Kolbeneinheit. Der Bremshebel ist mittels einer Betätigungsmechanik mit der Kolbeneinheit wirkverbunden. Das Zylindergehäuse weist ein hebelseitiges Ende und ein nehmerseitiges Ende auf. An dem nehmerseitigen Ende ist eine Anschlussöffnung zum Koppeln einer mit der Nehmereinheit fluidisch verbindbaren Leitungseinrichtung ausgebildet. An dem hebelseitigen Ende ist eine Verbindungsöffnung ausgebildet, durch welche sich die Betätigungsmechanik in den Zylinderraum zur Kolbeneinheit erstreckt. Dabei wird die Kolbeneinheit durch die Anschlussöffnung in den Zylinderraum eingesetzt.

Auch das erfindungsgemäße Verfahren löst die zuvor gestellte Aufgabe besonders vorteilhaft. Insbesondere ist das Verfahren so ausgestaltet, dass die zuvor beschriebene Bremsanordnung danach herstellbar ist. Insbesondere ist die zuvor beschriebene Bremsanordnung dazu geeignet und ausgebildet, nach dem hier beschriebenen Verfahren hergestellt zu werden.

Insbesondere wird die Kolbeneinheit vormontiert und dann in den Zylinderraum eingesetzt. Die Kolbeneinheit umfasst einen Kolben und wenigstens eine an am Kolben montierte Kolbendichtungseinrichtung. Insbesondere sind an den Kolben wenigstens eine Primärdichtung und wenigstens eine Sekundärdichtung montiert. Vorzugsweise wird die Anschlussöffnung vor dem Einsetzen der Kolbeneinheit mit wenigstens einer Fase ausgestattet. Das Herstellen der Fase kann auch als Anfasen bezeichnet werden. Das Anfasen erfolgt insbesondere durch Materialabtrag vom Zylindergehäuse am nehmerseitigen Ende. Vorzugsweise wird die Verbindungsöffnung mittels Materialabtrag von einer quer zu einer Längsachse des Zylinderraums verlaufenden (und unlösbar bzw. einstückig mit dem Zylindergehäuse verbundenen) Stützwand hergestellt. Insbesondere wird dabei die zuvor beschriebene Stützwand hergestellt. Insbesondere wird die Anschlussöffnung mittels Materialabtrag vom Zylindergehäuse hergestellt. Die Reihenfolge der Schritte ist insbesondere so gewählt, dass eine besonders präzise Bearbeitung der Kontaktfläche möglich ist und somit ein exakter Totweg erreicht wird.

Im Rahmen der vorliegenden Erfindung erfolgt der Materialabtrag insbesondere durch ein zerspanendes Verfahren und beispielsweise durch Fräsen und/oder Bohren oder dergleichen. Möglich sind auch andere geeignete abtragende Verfahren. In allen Ausgestaltungen ist es bevorzugt, dass der Materialabtrag vom Basiskörper erfolgt. Insbesondere wird der Basiskörper mittels Materialabtrag von einem Basiskörper-Rohling gefertigt.

Vorzugsweise wird der Pleuel mit der Pleuelstange und dem Pleuelkopf zeitlich vor der Kolbeneinheit durch die Anschlussöffnung eingesetzt. Vorzugsweise wird die so eingesetzte Pleuelstange durch die Verbindungsöffnung aus dem Zylinderraum wieder herausgeführt. Insbesondere verbleibt der Pleuelkopf dabei im Zylinderraum. Insbesondere wird der Pleuel mit der Pleuelstange voran durch die Anschlussöffnung in den Zylinderraum eingeführt. Insbesondere wird die Pleuelstange anschließend außerhalb des Zylinderraums und vorzugsweise im Aufnahmeraum mit der übrigen Betätigungsmechanik und vorzugsweise mit dem Nockenkörper und/oder Bremshebel verbunden.

Vorzugsweise wird der Zylinderraum mittels Materialabtrag vom Basiskörper der Gebereinheit hergestellt. Es ist bevorzugt, dass der Materialabtrag von dem nehmerseitigen Ende ausgehend in Richtung zum hebelseitigen Ende erfolgt. Insbesondere wird die Anschlussöffnung mittels Materialabtrag vom Basiskörper hergestellt. Insbesondere erfolgt der Materialabtrag für den Zylinderraum durch die Anschlussöffnung hindurch.

Vorzugsweise wird der Kontaktabschnitt mittels Materialabtrag von der Stützwand gefertigt. Insbesondere erfolgt der Materialabtrag vom nehmerseitigen Ende aus durch die Anschlussöffnung. Insbesondere wird dazu ein Werkzeug durch die Anschlussöffnung in den Zylinderraum eingeführt. Insbesondere wird der Kontaktabschnitt geometrisch korrespondierend zum Pleuelkopf ausgeformt.

Vorzugsweise wird eine Dichtungsnut mittels Materialabtrag vom Basiskörper hergestellt. Insbesondere wird die zuvor beschriebene Dichtungsnut hergestellt. Vorzugsweise erfolgt der Materialabtrag dabei von außerhalb des Zylinderraums und insbesondere von dem Aufnahmeraum aus. Insbesondere wird in die Dichtungsnut wenigstens ein Dichtungselement eingesetzt. Insbesondere wird die Pleuelstange durch das Dichtungselement geführt. Möglich ist auch, dass das Dichtungselement auf die Pleuelstange aufgeschoben wird.

Es ist besonders bevorzugt, dass die Ausgleichsbohrung mit einem definierten Abstand zum Kontaktabschnitt der Stützwand in den Basiskörper eingearbeitet wird. Beispielsweise wird die Ausgleichsbohrung gebohrt und oder gefräst oder dergleichen. Insbesondere wird die Ausgleichsbohrung quer zur Längsachse des Zylinderraums hergestellt. Das ermöglicht eine sehr exakte und zugleich unaufwendige Festlegung des Totwegs. Möglich sind weitere Bearbeitungsschritte, z. B. Honen, Polieren, Schleifen und/oder Eloxieren oder ein anderes Beschichten.

Insbesondere wird der Totweg dadurch festgelegt, dass die Ausgleichsbohrung mit einem definierten Abstand zur Stützwand in den Basiskörper eingearbeitet wird. Dabei ist der Totweg insbesondere der Weg, den die Kolbeneinheit zurücklegen muss, um von der Ruhestellung aus zu einer Position zu gelangen, bei welcher der Druckraum erstmalig von dem Behälterraum abgedichtet ist. Insbesondere ist der Totweg der Weg, den die Kolbeneinheit zurücklegen muss, bis die Primärdichtung die Ausgleichsbohrung verschließt.

Vorzugsweise wird das Vorspannelement durch die Anschlussöffnung eingesetzt. Vorzugsweise wird das Vorspannelement zwischen der Anschlusseinheit und der Kolbeneinheit eingespannt. Insbesondere wird das Vorspannelement durch Einschrauben der Anschlusseinheit in das Zylindergehäuse vorgespannt.

Insbesondere begrenzen die Kolbeneinheit und das Zylindergehäuse einen (mit der Nehmereinheit fluidisch verbindbaren) Druckraum. Insbesondere stellt der Druckraum einen Teil des Zylinderraums dar. Dabei ist die wenigstens eine Ausgleichsbohrung im Zylindergehäuse (insbesondere in einer Zylinderwandung des Zylindergehäuses) angeordnet. Die wenigstens eine Ausgleichsbohrung verbindet den Druckraum mit dem Fluidraum (wenn die Kolbeneinheit in einer Ruheposition ist bzw. wenn die Gebereinheit nicht betätigt wird). Bei einer Betätigung der Gebereinheit dichtet die Kolbeneinheit den Druckraum gegenüber dem Fluidraum insbesondere ab, sodass der Druckraum mit Druck beaufschlagbar ist. Mit anderen Worten, die Ausgleichsbohrung kann aufgrund einer Betätigung der Gebereinheit durch die Kolbeneinheit verschlossen werden. Eine anschließende weitere Bewegung der Kolbeneinheit führt insbesondere zu einem Druckaufbau im Druckraum und zu einer Verkleinerung des Volumens des Druckraums. Die Betätigung der Gebereinheit erfolgt insbesondere durch ein (manuelles) Bewegen bzw. Betätigen des Bremshebels.

Die Ausgleichsbohrung kann mehrere Einzelbohrungen umfassen bzw. durch mehrere Einzelbohrungen bereitgestellt werden. Wenn im Rahmen der vorliegenden Erfindung von der Ausgleichsbohrung die Rede ist, sind dann insbesondere alle Einzelbohrungen gemeint. Analog gilt dies insbesondere auch für die Schmierbohrung. Im Rahmen der vorliegenden Erfindung wird unter einer Bohrung insbesondere wenigstens eine längliche (kanalartige) (Durchgangs-) Öffnung verstanden.

Die Kolbeneinheit umfasst insbesondere einen Kolben (bzw. Kolbenkörper) und wenigstens eine Kolbendichtungseinrichtung. Der Kolben ist insbesondere einstückig ausgebildet. Der Kolben kann aber auch mehrteilig aufgebaut sein. Im Rahmen der vorliegenden Erfindung wird der Begriff "Kolbeneinheit" insbesondere so verwendet, dass damit der Kolben und die daran montierte Kolbendichtungseinrichtung gemeint sind.

Die Kolbendichtungseinrichtung umfasst insbesondere wenigstens eine umlaufend am Kolben angeordnete (erste) Kolbendichtung. Insbesondere dichtet die Kolbendichtung den Kolben gegenüber dem Zylindergehäuse ab. Insbesondere dichtet die Kolbendichtung den Druckraum gegenüber der Ausgleichsbohrung ab (wenn die Kolbeneinheit aufgrund einer Betätigung im Zylinderraum verschoben wird). Die Kolbendichtung kann auch als Primärdichtung bezeichnet werden.

Die Kolbendichtungseinrichtung umfasst insbesondere wenigstens eine weitere Kolbendichtung. Die weitere Kolbendichtung kann als Sekundärdichtung bezeichnet werden. Die weitere Kolbendichtung liegt insbesondere außerhalb des Druckraums. Die weitere Kolbendichtung liegt insbesondere beabstandet von der Primärdichtung. Die weitere Kolbendichtung liegt insbesondere zwischen der Primärdichtung und einem der Stützwand zugewandten Ende des Kolbens. Insbesondere dichtet die weitere Kolbendichtung einen Behälterraum gegenüber der Verbindungsöffnung und vorzugsweise gegenüber dem Aufnahmeraum ab.

Insbesondere umfasst der Basiskörper wenigstens das Zylindergehäuse, den Aufnahmeraum (bzw. ein Aufnahmeraumgehäuse), eine Behälterwanne einer Ausgleichsbehältereinrichtung für ein Hydraulikfluid, die Hebelaufnahme und/oder wenigstens einen Teil der Lenkeranbindung. Insbesondere sind die zuvor genannten Komponenten einstückig miteinander verbunden. Insbesondere stellen diese Komponenten den Basiskörper bereit oder sind zumindest Teil des Basiskörpers. Insbesondere kann der Basiskörper weitere Komponenten umfassen, welche einstückig daran ausgebildet sind.

Im Rahmen der vorliegenden Erfindung beziehen sich Angaben zur relativen Positionierung von Bauteilen insbesondere auf eine bestimmungsgemäße Montageposition der Bremsanordnung und insbesondere auf eine bestimmungsgemäß an einem Lenker montierte Gebereinheit. Der Begriff "fluiddicht" bezieht sich insbesondere auf das verwendete Hydraulikfluid unter den betriebsgemäß vorgesehenen Druckbedingungen.

Es ist möglich, dass in dem Zylindergehäuse eine Laufbuchse aufgenommen ist, welche separat zum Zylindergehäuse ausgebildet ist. Dann ist die Kolbeneinheit bewegbar in der Laufbuchse aufgenommen. Die Laufbuchse ist insbesondere in dem Zylindergehäuse angeordnet (befestigt) und von diesem umschlossen. Insbesondere kann die Laufbuchse nur durch die Anschlussöffnung in den Zylinderraum eingesetzt werden. Insbesondere kann die Kolbeneinheit nur durch die Anschlussöffnung in die Laufbuchse eingesetzt werden. Insbesondere verschließt die Laufbuchse nicht die Anschlussöffnung. Insbesondere ist die Kolbeneinheit durch die Anschlussöffnung montierbar, wenn die Laufbuchse bereits montiert ist. Insbesondere ist die Kolbeneinheit durch die Anschlussöffnung demontierbar, wenn die Laufbuchse montiert ist. Insbesondere muss die Laufbuchse nicht demontiert werden, um die Kolbeneinheit zu demontieren. Insbesondere verengt die Laufbuchse die Anschlussöffnung nicht derart, dass die Kolbeneinheit nicht mehr durch die Anschlussöffnung eingesetzt werden kann. Insbesondere ist die Laufbuchse nicht länger als das Zylindergehäuse (bezogen auf die Längsachse). Zusätzlich oder alternativ zu der Laufbuchse kann im Zylinderraum wenigstens eine Beschichtung ausgebildet sein, welche insbesondere die Reibungseigenschaften und/oder die Verschleißeigenschaften verbessert.

Insbesondere umfasst die Bremsanordnung wenigstens eine Lenkeranbindung zur Montage der Gebereinheit an einem Lenker. Insbesondere ist die Lenkeranbindung wenigstens abschnittsweise einstückig mit dem Basiskörper verbunden. Insbesondere umfasst die Lenkeranbindung wenigstens zwei Anbindungsabschnitte, welche den Lenker wenigstens teilweise umschließen. Insbesondere ist wenigstens ein erster der wenigstens zwei Anbindungsabschnitte einstückig mit dem Basiskörper verbunden. Wenigstens ein zweiter der wenigstens zwei Anbindungsabschnitte ist insbesondere separat zum Basiskörper ausgebildet und vorzugsweise am Basiskörper lösbar befestigbar (z. B. verschraubbar). Die Lenkeranbindung kann auch zur direkten Montage der Gebereinheit am Lenker ausgebildet sein (z. B. durch Schrauben oder einlaminierte Aufnahmen/Flansche am Lenker).

Der zweite Anbindungsabschnitt kann wenigstens zwei Teile umfassen, welche über ein Scharnier schwenkbar aneinander gekoppelt sind. Insbesondere ist jedes Teil separat an dem ersten Anbindungsabschnitt befestigt. Ein erstes Teil ist insbesondere mit wenigstens einer ersten Schraube am ersten Anbindungsabschnitt verschraubt. Ein zweites Teil ist insbesondere mit wenigstens einer zweiten Schraube an dem ersten Anbindungsabschnitt befestigt. Dabei ist die zweite Schraube insbesondere durch den Lenker verdeckt (und somit unzugänglich), wenn die Gebereinheit bestimmungsgemäß am Lenker montiert ist. Insbesondere wird die zweite Schraube angezogen, bevor die Gebereinheit am Lenker angeordnet wird. Insbesondere wird die erste Schraube angezogen, nachdem die Gebereinheit am Lenker angeordnet und ausgerichtet ist. Eine solche Lenkeranbindung bietet viele Vorteile und eignet sich besonders gut zur Verwendung mit dem hier vorgestellten einstückigen Basiskörper.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Darstellung eines Mountainbikes mit einer anmeldungsgemäßen Bremsanordnung;
- Fig. 2: eine schematische Darstellung eines Rennrades mit einer anmeldungsgemäßen Bremsanordnung;
- Fig. 3: eine schematische Darstellung einer anmeldungsgemäßen Bremsanordnung an einem Lenker eines Fahrrads in einer Draufsicht;
- Fig. 4: die Bremsanordnung in einer vergrößerten und geschnittenen Draufsicht;
- Fig. 5: die Bremsanordnung in einer in Längsrichtung geschnittenen perspektivischen Seitenansicht von schräg oben;
- Fig. 6: die Bremsanordnung in einer geschnittenen Seitenansicht;
- Fig. 7: die Bremsanordnung in einer geschnittenen Seitenansicht in einer bestimmungsgemäßen Montageposition;
- Fig. 8: eine im Bereich der Ausgleichsbehältereinrichtung quer zur Längsrichtung geschnittene Detaildarstellung der Bremsanordnung;
- Fig. 9: eine Detaildarstellung der Membraneinheit der Bremsanordnung in einer perspektivischen Ansicht;
- Fig. 10: eine Detaildarstellung der Bremsanordnung in einer geschnittenen perspektivischen Seitenansicht von schräg vorne; und
- Fig. 11: eine Darstellung eines vergrößerten Ausschnitts der Figur 6.

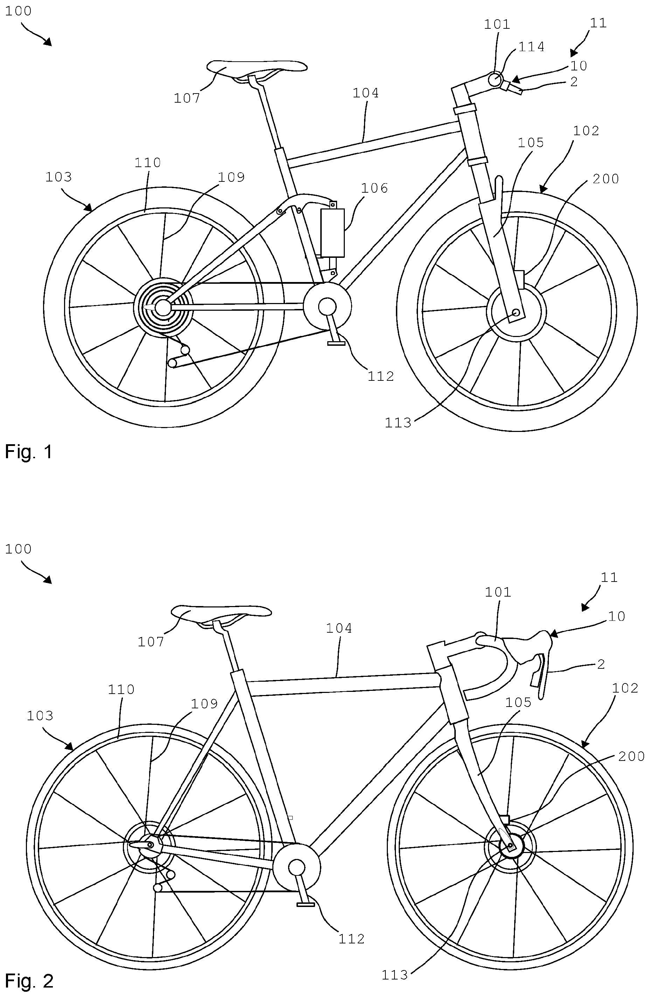

In den Figuren 1 und 2 sind als Mountainbike bzw. Rennrad ausgebildete Fahrräder 100 dargestellt, die jeweils mit einer anmeldungsgemäßen hydraulischen Bremsanordnung 1 ausgerüstet sind. Die Fahrräder 100 verfügen jeweils über ein Vorderrad 102 und ein Hinterrad 103, die über jeweils einen separaten Hydraulikkreis 11 einzeln gebremst werden können. Dazu umfassen die Hydraulikkreise 11 jeweils eine Gebereinheit 10 und eine Nehmereinheit 200.

Ein Fahrrad 100 verfügt über einen Rahmen 104, einen Lenker 101 mit Griffen 114, einen Sattel 107, eine Gabel bzw. Federgabel 105 und im Falle des Mountainbikes kann ein Hinterraddämpfer 106 vorgesehen sein. Zum Antrieb dient eine Tretkurbel 112 mit Pedalen. Gegebenenfalls kann ein elektrischer Hilfsantrieb an der Tretkurbel 112 und/oder den Rädern 102, 103 vorgesehen sein. Die Naben der Räder 102, 103 können jeweils über ein Spannsystem 113 (zum Beispiel eine Steckachse oder einen Schnellspanner) an dem Rahmen 104 bzw. der Gabel 105 befestigt sein.

An dem Rahmen 104 und an der Gabel 105 ist jeweils eine hier als hydraulische Scheibenbremse ausgebildete Nehmereinheit 200 befestigt. Die Nehmereinheit 200 ist über eine hier nicht sichtbare Leitungseinrichtung 201 mit der zugehörigen Gebereinheit 10 verbunden, sodass sich ein geschlossener Hydraulikkreis 11 ergibt. Die Gebereinheiten 10 eines Fahrrads 100 sind an gegenüberliegenden Enden des Lenkers 101 montiert und weisen jeweils einen mit den Fingern betätigbaren Bremshebel 2 auf. Bei dem Rennrad 100 ist die Gebereinheit 10 als eine Schalt-Brems-Kombination ausgebildet.

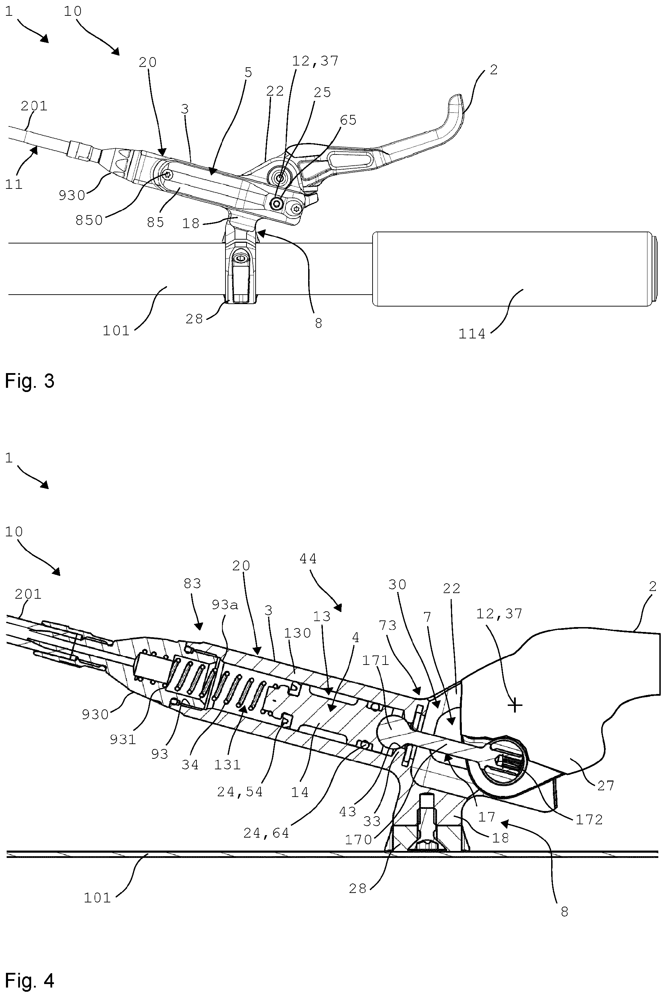

Die anmeldungsgemäße Bremsanordnung 1 wird nun mit Bezug zu den verschiedenen Darstellungen der Figuren 3 bis 11 näher beschrieben.

Die Bremsanordnung 1 umfasst eine Gebereinheit 10, welche über eine Leitungseinrichtung 201 mit einer hier nicht dargestellten Nehmereinheit 200 und beispielsweise einer Scheibenbremse verbunden ist. Die Gebereinheit 10 ist hier mittels einer Lenkeranbindung 8 an einem Lenker 101 eines Fahrrads 100 befestigt, wie es zuvor beschrieben wurde.

Die Lenkeranbindung 8 umfasst hier zwei Anbindungsabschnitte 18, 28. Der erste Anbindungsabschnitt 18 ist integraler Bestandteil eines Basiskörpers 20. Der zweite Anbindungsabschnitt 28 ist an dem ersten Anbindungsabschnitt 18 verschraubt und umfasst hier zwei Teile, welche über ein Scharnier schwenkbar aneinander gekoppelt sind.

Die Gebereinheit 10 umfasst ein Zylindergehäuse 3 mit einem Zylinderraum 13 und eine in dem Zylinderraum 13 verschiebbar aufgenommene Kolbeneinheit 4. Auch das Zylindergehäuse 3 ist integraler Bestandteil des Basiskörpers 20.

An einer ebenfalls im Basiskörper 20 integrierten Hebelaufnahme 22 ist ein Bremshebel 2 gelagert, sodass dieser um eine Bremshebelschwenkachse 12 verschwenkt werden kann. Der Bremshebel 2 ist mittels einer Betätigungsmechanik 7 an die Kolbeneinheit 4 gekoppelt. Durch ein Ziehen am Bremshebel 2 wird die Kolbeneinheit 4 im Zylinderraum 13 verschoben.

Die Betätigungsmechanik 7 umfasst hier einen Pleuel 17 mit einer Pleuelstange 170 und einem Pleuelkopf 171 sowie einem Nockenkörper 27. Der Nockenkörper 27 ist an der Hebelaufnahme 22 gelagert, sodass er um eine Nockenschwenkachse 37 verschwenkt werden kann. Die Bremshebelschwenkachse 12 und die Nockenschwenkachse 37 sind hier identisch. Der Pleuel 17 ist um eine Pleuelschwenkachse 172 schwenkbar am Nockenkörper 27 angebunden. Der Nockenkörper 27 ist in einem Aufnahmeraum 30 des Basiskörpers 20 untergebracht. Der Nockenkörper 27 ist hier einstückig mit dem Bremshebel 2 ausgebildet.

Das Zylindergehäuse 3 weist ein hebelseitiges Ende 73 und ein nehmerseitiges Ende 83 auf. Dabei liegt der Aufnahmeraum 30 auf einer gemeinsamen Längsachse mit dem Zylinderraum 13. An dem nehmerseitigen Ende 83 ist eine Anschlussöffnung 93 zum Koppeln der Leitungseinrichtung 201 ausgebildet. An dem hebelseitigen Ende 73 ist eine Verbindungsöffnung 43 ausgebildet, durch welche sich die Pleuelstange 170 vom Aufnahmeraum 30 aus in den Zylinderraum 13 zur Kolbeneinheit 4 erstreckt. Die Verbindungsöffnung 43 ist in einer Stützwand 33 ausgebildet, welche einstückig mit dem Zylindergehäuse 3 verbunden ist.

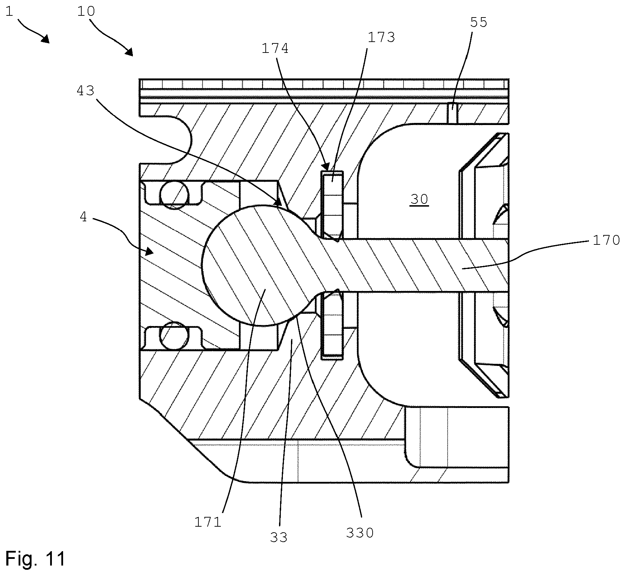

Die Kolbeneinheit 4 umfasst einen Kolben 14 und eine Kolbendichtungseinrichtung 24, welche durch eine Primärdichtung 54 und eine Sekundärdichtung 64 bereitgestellt wird. Die Kolbeneinheit 4 befindet sich hier in einer Ruheposition 44, da die Gebereinheit 10 nicht betätigt wird. In der Ruheposition 44 liegt der Pleuelkopf 171 an einem Kontaktabschnitt 330 der Stützwand 33 an (vgl. Fig. 11). Dabei liegt die Kolbeneinheit 4 mit ihrem hebelseitigen Ende an dem Pleuelkopf 171 an.

An dem gegenüberliegenden Ende der Kolbeneinheit 4 liegt ein hier als Feder ausgebildetes Vorspannelement 34 an. Das Vorspannelement 34 stützt sich an einem Stützkragen 931 einer Anschlusseinheit 930 ab. Die Anschlusseinheit 930 ist in das nehmerseitige Ende 83 des Zylindergehäuses 3 eingeschraubt, sodass das Hydraulikfluid nur über die Anschlusseinheit 930 und die daran angebundene Leitungseinrichtung 201 aus dem Zylinderraum 13 austreten kann. Zwischen der Anschlusseinheit 930 und dem Zylindergehäuse 3 ist eine Dichtung 932 angeordnet, sodass das Gewinde nicht zwingend abdichten muss.

Zur Bevorratung eines Hydraulikfluids ist eine Ausgleichsbehältereinrichtung 5 mit einem Behälterraum 15 vorgesehen. Als Hydraulikfluid ist hier ein biologisch abbaubares Öl vorgesehen. Alternativ können auch ein mineralisches Öl oder eine Bremsflüssigkeit (DOT) vorgesehen sein. Die Ausgleichsbehältereinrichtung 5 umfasst eine Behälterwanne 75 und einen Deckel 85. Die Behälterwanne 75 ist integraler Bestandteil des Basiskörpers 20.

Im Deckel 85 ist eine Einfüllöffnung 25, welche hier zugleich auch als Entlüftungsöffnung 65 zum Entlüften des Hydraulikkreises 11 im Rahmen von Wartungsarbeiten dient. Der Deckel 85 der Ausgleichsbehältereinrichtung 5 ist hier mit zwei Schrauben 850 an der Behälterwanne 75 befestigt. Zum Verschließen der Einfüllöffnung 25 bzw. der Entlüftungsöffnung 65 ist hier ebenfalls eine Schraube 850 vorgesehen.

In dem Behälterraum 15 ist eine Membraneinheit 6 angeordnet, welche den Behälterraum 15 in einen Fluidraum 35 für das Hydraulikfluid und einen Luftraum 45 unterteilt. Dabei dichtet die Membraneinheit 6 den Fluidraum 35 gegenüber dem Luftraum 45 ab.

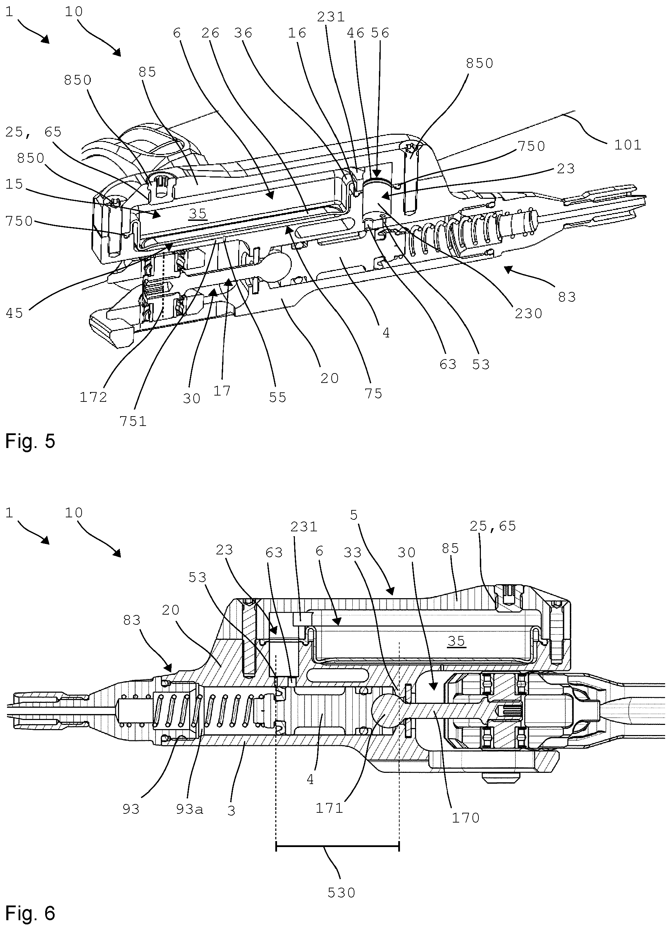

Die Kolbeneinheit 4 und das Zylindergehäuse 3 begrenzen hier einen Druckraum 131, welcher einen Teil des Zylinderraums 13 bildet. Der Druckraum 131 ist über eine in einer Zylinderwandung 130 des Zylindergehäuses 3 ausgebildete Ausgleichsbohrung 53 mit dem Fluidraum 35 verbunden. Die Ausgleichsbohrung 53 besteht hier rein beispielhaft aus insgesamt drei Einzelbohrungen. In der Schnittdarstellung der Figur 5 verläuft die Schnittebene durch die zentrale Bohrung der drei Bohrungen.

Die Ausgleichsbohrung 53 liegt frei, wenn die Kolbeneinheit 4 in der Ruheposition 44 ist. Bei einer Betätigung der Gebereinheit 10 dichtet die Kolbeneinheit 4 mit ihrer Primärdichtung 54 den Druckraum 131 gegenüber dem Fluidraum 35 ab. Dadurch kann der Druckraum 131 mit Druck beaufschlagt werden, wenn weiter am Bremshebel 2 gezogen wird. Dann wird die Nehmereinheit 200 betätigt und beispielsweise ein Kolben einer Scheibenbremse ausgefahren.

Zusätzlich zu der Ausgleichsbohrung 53 ist der Zylinderraum 13 über eine Schmierbohrung 63 mit dem Fluidraum 35 verbunden. Dabei mündet die Schmierbohrung 63 in einen außerhalb des Druckraums 131 liegenden Teil des Zylinderraums 13. Über die Schmierbohrung 63 kann Hydraulikfluid hinter die Primärdichtung 54 gelangen, um dort die Kolbeneinheit 4 zu schmieren. Zudem kann das Hydraulikfluid über die Schmierbohrung 63 wieder zurück in den Behälterraum 15 strömen, wenn es hinter die Primärdichtung 54 gelangt ist. Die Schmierbohrung 63 wird durch die Sekundärdichtung 64 zur Verbindungsöffnung 43 und dem dahinter liegenden Aufnahmeraum 30 abgedichtet.

Die Ausgleichsbohrung 53 und die Schmierbohrung 63 sind hier Teil einer Kanalverbindung 23, welche den Fluidraum 35 mit dem Zylinderraum 13 verbindet. Die Ausgleichsbohrung 53 und die Schmierbohrung 63 verlaufen dabei von einem Zentralkanal 230 der Kanalverbindung 230 aus in den Zylinderraum 15. Der Zentralkanal 230 ist über einen im Deckel 85 ausgebildeten Querkanal 231 mit dem Fluidraum 35 verbunden. Der Zentralkanal 230 und die Ausgleichsbohrung 53 und die Schmierbohrung 63 sind hier im Basiskörper 20 ausgebildet.

Der Luftraum 45 ist über eine Belüftungsöffnung (und insbesondere z. B. eine Belüftungsbohrung) 55 mit der Atmosphäre verbunden. So werden Druckänderungen ausgeglichen, wenn die Menge an Hydraulikfluid im Fluidraum 35 zunimmt oder abnimmt und sich dadurch die Membraneinheit 6 nach unten bzw. oben wölbt. Die Belüftungsöffnung 55 ist hier im Boden 751 der Behälterwanne 75 ausgebildet und mündet in den Aufnahmeraum 30. Dadurch ist die Belüftungsöffnung 55 im Bereich ihrer Mündung vom Basiskörper 20 umgeben und somit gut geschützt im Aufnahmeraum 30 untergebracht.

Bei der hier gezeigten Gebereinheit 120 schneidet eine gedachte Verlängerung der Längsachse der Belüftungsöffnung 55 die Pleuelstange 170. Zudem verlaufen die Pleuelschwenkachse 172 und die Belüftungsöffnung 55 parallel zueinander. Die Bremshebelschwenkachse 12 verläuft parallel zur Längsachse der Belüftungsöffnung 55. Zudem weisen die Belüftungsöffnung 55, die mittlere der drei Ausgleichsbohrungen 53 und die Schmierbohrung 63 und der Zentralkanal 230 Längsachsen auf, welche parallel zueinander verlaufen. Die Ausgleichsbehältereinrichtung 5 und der Zylinderraum 13 weisen Längsachsen auf, welche parallel zueinander verlaufen.

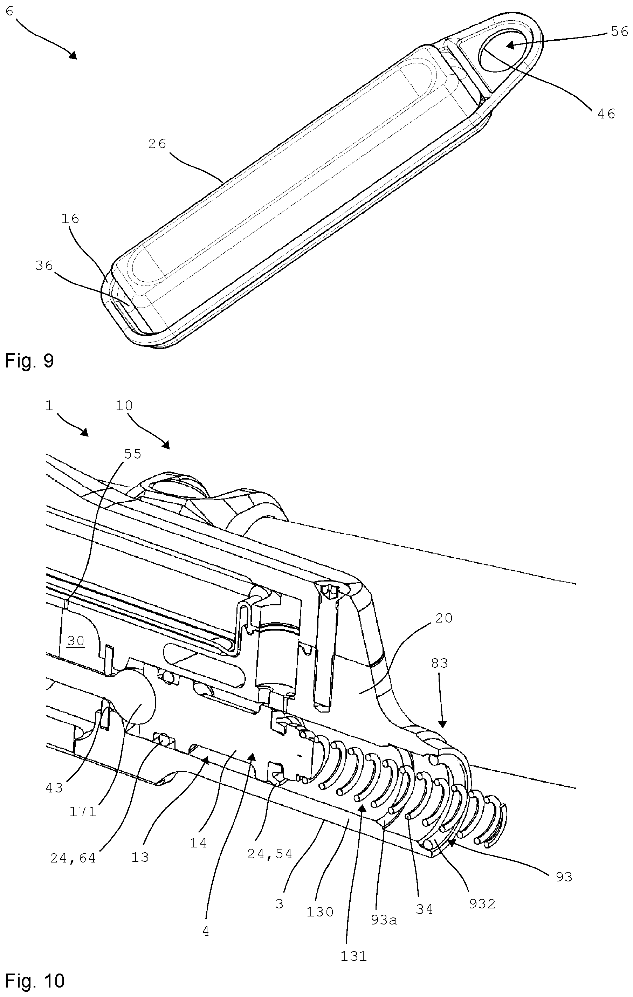

Die Membraneinheit 6 ist einstückig ausgebildet und umfasst hier eine Behälterdichtung 16 und ein Membranelement 26 und ein Verbindungselement 36 sowie eine Kanaldichtung 46. Die Membraneinheit 6 ist in der Detaildarstellung der Figur 9 besonders gut zu erkennen.

Im bestimmungsgemäßen Montagezustand erstreckt sich die Behälterdichtung 16 zwischen der Behälterwanne 75 und dem Deckel 85, sodass diese abgedichtet aneinander montiert sind. Das Membranelement 26 ist von der Behälterdichtung 16 umgeben und zwischen dem Fluidraum 35 und dem Luftraum 45 aufgespannt.

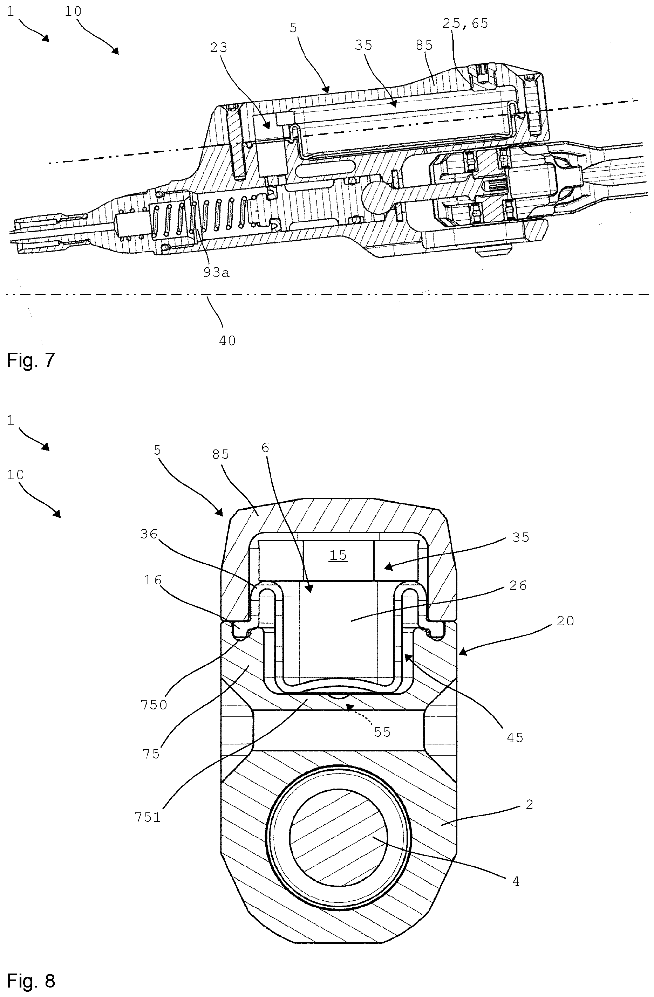

Das Verbindungselement 36 ist bogenförmig ausgebildet und verbindet das Membranelement 26 mit der Behälterdichtung 16. Dabei spannt das Verbindungselement 36 das Membranelement 26 im Bereich eines umlaufenden Bodenrandes gegen den Boden 751 der Behälterwanne 75 vor (vgl. Fig. 8). Im Bereich der Belüftungsöffnung 55 ist das Membranelement 26 hier gewölbt ausgebildet, sodass es dort beabstandet vom Boden 751 angeordnet ist.

Die Behälterdichtung 16 ist in einer Aufnahmenut 750 der Behälterwanne 75 aufgenommen. Da die Behälterwanne 75 und der Deckel 85 im Bereich der Aufnahmenut 750 beabstandet sind, kann die Behälterdichtung 16 auch bei einem Stoß auf den Deckel 85 nicht abgeschert werden. Im Bereich der Kanaldichtung 46 verläuft die Behälterdichtung 16 zwischen der Kanaldichtung 46 und dem Membranelement 26. Zudem weist der Basiskörper 20 im Bereich der Kanaldichtung 46 ebenfalls eine Aufnahmenut 750 auf, um ein Abscheren der Kanaldichtung 46 zu vermeiden.

Die Kanaldichtung 46 dient dazu, die Kanalverbindung 23 zum Deckel 85 und zum Basiskörper 20 abzudichten. Da sich die Kanalverbindung 23 hier vom Fluidraum 35 aus durch den Deckel 85 und weiter durch den Basiskörper 20 zum Zylinderraum 13 erstreckt, muss das Hydraulikfluid nicht durch das Membranelement 26 hindurchströmen. Das Hydraulikfluid kann hier die Membraneinheit 6 außerhalb der Behälterdichtung 16 passieren.

Dazu tritt das Hydraulikfluid durch eine in der Kanaldichtung 46 ausgebildete Durchgangsöffnung 56 durch die Membraneinheit 6 hindurch. Dadurch kann auf eine Durchführung im Membranelement 26 verzichtet werden, welche meist nur sehr aufwendig abgedichtet werden kann. Dennoch müssen keine zusätzlichen Abdichtungen verbaut werden, da die Membraneinheit 6 zugleich auch die Kanaldichtung 46 bereitstellt.

Der Luftraum 45 ist hier unterhalb des Fluidraums 35 ausgebildet. Die Einfüllöffnung 25 mündet dabei direkt in den Fluidraum 35, sodass die Membraneinheit 6 zum Nachfüllen des Hydraulikfluids nicht entfernt werden muss. Da die Einfüllöffnung 24 zugleich auch als Entlüftungsöffnung 65 ausgebildet ist, muss die Membraneinheit 6 auch zum Entlüften nicht demontiert werden.

Wie in der Figur 7 gut zu erkennen ist, weist die Ausgleichsbehältereinrichtung (bzw. die Gebereinheit 10 insgesamt) eine Längsachse auf (in der Figur 7 strichpunktiert eingezeichnet), welche zur Horizontalen 40 geneigt ist, wenn die Gebereinheit 10 bestimmungsgemäß an einem Lenker 101 des Fahrrads 100 montiert ist. Dadurch ist der Endabschnitt der Ausgleichsbehältereinrichtung 5, an welchem die Einfüllöffnung 25 und die Entlüftungsöffnung 65 angeordnet sind, höher als der gegenüberliegende Endabschnitt. Somit sammelt sich das Hydraulikfluid im Bereich der Kanalverbindung 23, während sich eventuell im Fluidraum 35 vorhandene Luft an dem Endabschnitt mit der Einfüllöffnung 25 bzw. der Entlüftungsöffnung 65 sammelt. Die Kanalverbindung 23 und die Einfüllöffnung 25 sind hier an in Längsrichtung gegenüberliegenden Endabschnitten der Ausgleichsbehältereinrichtung 5 angeordnet.

Bei der Herstellung der hier gezeigten Bremsanordnung 1 wird der Basiskörper 20 durch gezielten Materialabtrag aus einem Basiskörper-Rohling hergestellt. Dadurch entsteht der hier gezeigte Basiskörper 20, in den das Zylindergehäuse 3 mit dem Zylinderraum 13 und der Stützwand 33 und dem Kontaktabschnitt 330, die Hebelaufnahme 22 und die Behälterwanne 75 der Ausgleichsbehältereinrichtung 5 sowie der Aufnahmeraum 30 und die entsprechenden Bohrungen bzw. Kanäle fest integriert sind.

Nach der Ausarbeitung des Zylinderraums 13 ist die Stützwand 33 von der Anschlussöffnung 93 aus sehr gut und einfach mit Werkzeugen zugänglich. So kann die Kontaktfläche 330 von der Anschlussöffnung 93 aus unaufwendig und zugleich mit hoher Präzision bearbeitet werden. Zuvor oder anschließend kann die Verbindungsöffnung 43 ebenfalls über die Anschlussöffnung 93 oder auch vom Aufnahmeraum 30 aus hergestellt werden. Die Ausgleichsbohrung 53 kann zeitlich vor oder auch zeitlich nach der Herstellung des Kontaktabschnitts 330 hergestellt werden.

In jedem Fall werden die Ausgleichsbohrung 53 und der Kontaktabschnitt 330 in einem definierten Abstand 530 zueinander in den Basiskörper 20 eingearbeitet (vgl. Fig. 6). Bei noch nicht montiertem Deckel 85 kann die Ausgleichsbohrung 53 sehr unaufwendig und mit hoher Präzision im Basiskörper 20 positioniert werden, sodass der Abstand 530 mit besonders geringer Toleranz eingehalten werden kann. Bei gegebenen Dimensionen der Kolbeneinheit 4 und des Pleuels 17 wird der Totweg über den Abstand 530 definiert. Da bei der Erfindung der Abstand 530 genau eingehalten werden kann, wird auch der Totweg mit besonders geringen Toleranzen festgelegt.

Nach der Fertigstellung des Zylinderraums 13 wird die Kolbeneinheit 4 im vormontierten Zustand (der Kolben 14 mit montierter Kolbendichtungseinrichtung 24) durch die Anschlussöffnung 93 in den Zylinderraum 13 eingesetzt. Der minimale Durchmesser der Anschlussöffnung 93 ist auf den maximalen Durchmesser der Querschnittsgeometrie der Kolbeneinheit 4 abgestimmt. Zum Schutz der Kolbendichtungseinrichtung 24 beim Einschieben ist die Anschlussöffnung 93 hier mit einer Fase 93a ausgestattet.

Zuvor wird der Pleuel 17 mit der Pleuelstange 170 voran durch die Anschlussöffnung 93 in den Zylinderraum 13 eingesetzt. Die Pleuelstange 171 wird durch die Verbindungsöffnung 43 aus dem Zylinderraum 13 wieder herausgeführt und im Aufnahmeraum 30 mit dem Nockenkörper 27 verbunden.

Auf einer vom Zylinderraum 13 abgewandten Seite der Verbindungsöffnung 43 wird eine Dichtungsnut 174 in den Basiskörper 20 eingearbeitet. In die Dichtungsnut 174 wird ein Dichtungselement 173 eingesetzt, durch welches sich die Pleuelstange 170 erstreckt. Dadurch wird der Zylinderraum 13 zum Aufnahmeraum 30 hin abgedichtet.

Nach dem Einsetzen der Kolbeneinheit 4 in den Zylinderraum 13 wird über die Anschlussöffnung 93 das Vorspannelement 34 eingesetzt (vgl. Fig. 10). Anschließend wird die Anschlusseinheit 930 eingeschraubt und dadurch das Vorspannelement 34 zusammengedrückt. Durch das Vorspannelement 34 wird die Kolbeneinheit 4 in der Ruheposition 44 so vorgespannt, dass der Pleuelkopf 171 gegen den Kontaktabschnitt 330 der Stützwand 33 gedrückt wird.

Die hier gezeigte Gebereinheit 10 ermöglicht aufgrund ihres besonderen konstruktiven Aufbaus einen Wechsel der Kolbendichtungseinrichtung 24 bzw. des Kolbens 14 innerhalb kürzester Zeit und für geübte Personen beispielsweise in weniger als einer Minute. Um Zugang zur Kolbeneinheit 4 zu bekommen, muss lediglich die Anschlusseinheit 930 abgeschraubt werden. Da die Kolbeneinheit 4 nur lose am Pleuel 17 (vorgespannt) anliegt, kann die Kolbeneinheit 4 ganz einfach durch die Anschlussöffnung 93 aus den Zylinderraum 13 herausgezogen werden. Nach dem Anbringen beispielsweise einer neuen Primärdichtung 54 kann die Kolbeneinheit 4 ebenso einfach wieder in den Zylinderraum 13 eingesetzt werden.

Nach dem Einsetzen des Vorspannelements 34 und dem Verschrauben der Anschlusseinheit 930 ist die Gebereinheit 10 dann wieder fertig montiert. Aufgrund des fest in den Basiskörper 20 integrierten Abstands 530 und der einstückig im Basiskörper 20 ausgebildeten Stützwand 33 mit ihrem Kontaktabschnitt 330 ist der Totweg dann auch automatisch wieder optimal eingestellt. Ein anschließendes Befüllen und Entlüften des Hydraulikkreises 11 kann aufgrund der hier beschriebenen Ausgleichsbehältereinrichtung 5 und der Membraneinheit 6 sehr einfach und sicher erfolgen.

**Bezugszeichenliste:**

| | | | |
|---|---|---|---|
| 1 | Bremsanordnung | 64 | Sekundärdichtung |
| 2 | Bremshebel | 65 | Entlüftungsöffnung |
| 3 | Zylindergehäuse | 73 | Ende |
| 4 | Kolbeneinheit | 75 | Behälterwanne |
| 5 | Ausgleichsbehältereinrichtung | 83 | Ende |
| | | 85 | Deckel |
| 6 | Membraneinheit | 93 | Anschlussöffnung |
| 7 | Betätigungsmechanik | 93a | Fase |
| 8 | Lenkeranbindung | 100 | Fahrrad |
| 10 | Gebereinheit | 101 | Lenker |
| 11 | Hydraulikkreis | 102 | Rad, Vorderrad |
| 12 | Bremshebelschwenkachse | 103 | Rad, Hinterrad |
| 13 | Zylinderraum | 104 | Rahmen |
| 14 | Kolben | 105 | Gabel, Federgabel |
| 15 | Behälterraum | 106 | Hinterraddämpfer |
| 16 | Behälterdichtung | 107 | Sattel |
| 17 | Pleuel | 109 | Speiche |
| 18 | Anbindungsabschnitt | 110 | Felge |
| 20 | Basiskörper | 112 | Tretkurbel |
| 22 | Hebelaufnahme | 113 | Spannsystem |
| 23 | Kanalverbindung | 114 | Griff |
| 24 | Kolbendichtungseinrichtung | 130 | Zylinderwandung |
| 25 | Einfüllöffnung | 131 | Druckraum |
| 26 | Membranelement | 170 | Pleuelstange |
| 27 | Nockenkörper | 171 | Pleuelkopf |
| 28 | Anbindungsabschnitt | 172 | Pleuelschwenkachse |
| 30 | Aufnahmeraum | 173 | Dichtungselement |
| 33 | Stützwand | 174 | Dichtungsnut |
| 34 | Vorspannelement | 200 | Nehmereinheit |
| 35 | Fluidraum | 201 | Leitungseinrichtung |
| 36 | Verbindungselement | 230 | Zentralkanal |
| 37 | Nockenschwenkachse | 231 | Querkanal |
| 40 | Horizontale | 330 | Kontaktabschnitt |
| 43 | Verbindungsöffnung | 530 | Abstand |
| 44 | Ruheposition | 750 | Aufnahmenut |
| 45 | Luftraum | 751 | Boden |
| 46 | Kanaldichtung | 850 | Schraube |
| 53 | Ausgleichsbohrung | 930 | Anschlusseinheit |
| 54 | Primärdichtung | 931 | Stützkragen |
| 55 | Belüftungsöffnung | 932 | Dichtung |
| 56 | Durchgangsöffnung | | |
| 63 | Schmierbohrung | | |

## Patentansprüche

1. Hydraulische Bremsanordnung (1) für ein wenigstens teilweise muskelbetriebenes Fahrrad (100), umfassend wenigstens eine mit einer Nehmereinheit (200) fluidisch verbindbare Gebereinheit (10), wobei die Gebereinheit (10) einen Bremshebel (2) und ein Zylindergehäuse (3) mit einem Zylinderraum (13) und eine in dem Zylinderraum (13) verschiebbar aufgenommene Kolbeneinheit (4) aufweist, wobei der Bremshebel (2) mittels einer Betätigungsmechanik (7) mit der Kolbeneinheit (4) wirkverbunden ist, wobei das Zylindergehäuse (3) ein hebelseitiges Ende (73) und ein nehmerseitiges Ende (83) aufweist und wobei an dem hebelseitigen Ende (73) eine Verbindungsöffnung (43) ausgebildet ist, durch welche sich die Betätigungsmechanik (7) in den Zylinderraum (13) zur Kolbeneinheit (4) erstreckt, wobei die Verbindungsöffnung (43) in einer quer zu einer Längsachse des Zylinderraums (13) verlaufenden und unlösbar mit dem Zylindergehäuse (3) verbundenen Stützwand (33) ausgebildet ist,
**dadurch gekennzeichnet,**
**dass** an dem nehmerseitigen Ende (83) eine Anschlussöffnung (93) zum Koppeln einer mit der Nehmereinheit (200) fluidisch verbindbaren Leitungseinrichtung (201) ausgebildet ist und dass die Kolbeneinheit (4) durch die Anschlussöffnung (93) in den Zylinderraum (13) einsetzbar ist.

2. Bremsanordnung (1) nach dem vorhergehenden Anspruch, wobei die Stützwand (33) die Bewegbarkeit der Kolbeneinheit (4) am hebelseitigen Ende (73) begrenzt und insbesondere eine Ruheposition (44) der Kolbeneinheit (4) definiert.

3. Bremsanordnung (1) nach einem der vorhergehenden Ansprüche, wobei die Anschlussöffnung (93) einen minimalen Durchmesser aufweist, welcher größer als ein maximaler Durchmesser einer Querschnittsgeometrie der Kolbeneinheit (4) ist.

4. Bremsanordnung (1) nach einem der vorhergehenden Ansprüche, wobei die Verbindungsöffnung (43) einen minimalen Durchmesser aufweist, welcher kleiner als ein maximaler Durchmesser einer Querschnittsgeometrie der Kolbeneinheit (4) ist, sodass die Kolbeneinheit (4) nicht durch die Verbindungsöffnung (43) hindurchtreten kann.

5. Bremsanordnung (1) nach einem der vorhergehenden Ansprüche, wobei die Verbindungsöffnung (43) einen minimalen Durchmesser aufweist, welcher kleiner als ein maximaler Durchmesser einer Querschnittsgeometrie eines innerhalb des Zylindergehäuses (3) liegenden Teils der Betätigungsmechanik (7) ist.

6. Bremsanordnung (1) nach einem der vorhergehenden Ansprüche, wobei die Kolbeneinheit (4) über ihre gesamte axiale Länge radial vom Zylindergehäuse (3) umschlossen ist.

7. Bremsanordnung (1) nach einem der vorhergehenden Ansprüche, wobei der Bremshebel (2) an einer Hebelaufnahme (22) schwenkbar gelagert ist und wobei das Zylindergehäuse (3) einstückig mit der Hebelaufnahme (22) verbunden ist.

8. Bremsanordnung (1) nach einem der vorhergehenden Ansprüche, wobei das Zylindergehäuse (3) integraler Bestandteil eines Basiskörpers (20) der Gebereinheit (10) ist.

9. Bremsanordnung (1) nach dem vorhergehenden Anspruch, wobei der Zylinderraum (13) durch eine Ausnehmung im Basiskörper (20) bereitgestellt wird.

10. Bremsanordnung (1) nach einem der vorhergehenden Ansprüche, wobei in dem Zylindergehäuse (3) wenigstens eine Ausgleichsbohrung (53) angeordnet ist und wobei ein Abstand (530) zwischen der Ausgleichsbohrung (530) und der Stützwand (33) fest in einen Werkstoff des Zylindergehäuses (3) eingearbeitet ist.

11. Bremsanordnung (1) nach einem der vorhergehenden Ansprüche, wobei die Betätigungsmechanik (7) wenigstens einen Pleuel (17) mit einer Pleuelstange (170) und einem Pleuelkopf (171) umfasst und wobei sich die Pleuelstange (170) durch die Verbindungsöffnung (43) hindurch in den Zylinderraum (13) erstreckt und wobei der Pleuelkopf (171) im Zylinderraum (13) zwischen der Stützwand (33) und der Kolbeneinheit (4) angeordnet ist.

12. Bremsanordnung (1) nach dem vorhergehenden Anspruch, wobei die Stützwand (33) einen mit dem Pleuelkopf (171) geometrisch korrespondierenden Kontaktabschnitt (330) aufweist und wobei der Kontaktabschnitt (330) konkav und der Pleuelkopf (171) wenigstens abschnittweise konvex ausgebildet ist.

13. Bremsanordnung (1) nach einem der beiden vorhergehenden Ansprüche, wobei die Kolbeneinheit (4) mittels eines Vorspannelements (34) in eine Ruheposition (44) vorspannbar ist und wobei das Vorspannelement (34) den Pleuelkopf (171) gegen die Stützwand (33) drückt.

14. Bremsanordnung (1) nach einem der drei vorhergehenden Ansprüche, wobei die Pleuelstange (171) außerhalb des Zylinderraums (13) in einem von einem Basiskörper (20) der Gebereinheit (10) wenigstens teilweise umschlossenen Aufnahmeraum (30) angeordnet ist.

15. Bremsanordnung (1) nach einem der vorhergehenden Ansprüche, wobei der Bremshebel (2) um eine Bremshebelschwenkachse (12) schwenkbar gelagert ist und wobei die Bremshebelschwenkachse (12) seitlich neben einer gedachten Verlängerung des Zylinderraums (13) angeordnet ist.

16. Bremsanordnung (1) nach Anspruch 11, wobei der Verbindungsöffnung (43) auf ihrer vom Zylinderraum (13) abgewandten Seite wenigstens ein Dichtungselement (173) vorgelagert ist und wobei sich die Pleuelstange (170) durch das Dichtungselement (173) erstreckt.

17. Bremsanordnung (1) nach einem der vorhergehenden Ansprüche, wobei die Anschlussöffnung (93) und die Verbindungsöffnung (43) und der Zylinderraum (13) und die Kolbeneinheit (4) auf einer gemeinsamen Längsachse angeordnet sind.

18. Bremsanordnung (1) nach einem der vorhergehenden Ansprüche, wobei die Anschlussöffnung (93) mit einer Anschlusseinheit (930) zur Anbindung einer Leitungseinrichtung (201) koppelbar ist und wobei die Anschlusseinheit (930) in das Zylindergehäuse (3) einschraubbar ist und wobei die Anschlussöffnung (93) nur durch die Anschlusseinheit (930) so verengt wird, dass die Kolbeneinheit (4) nicht mehr durch die Anschlussöffnung (93) aus dem Zylinderraum (13) heraustreten kann.

19. Bremsanordnung (1) nach dem vorhergehenden Anspruch, wobei die Anschlusseinheit (930) einen Stützkragen (931) aufweist, an welchem sich ein Vorspannelement (34) abstützt.

20. Verfahren zur Herstellung einer hydraulischen Bremsanordnung (1) für ein wenigstens teilweise muskelbetriebenes Fahrrad insbesondere nach einem der vorhergehenden Ansprüche, umfassend wenigstens eine mit einer Nehmereinheit (200) fluidisch verbindbare Gebereinheit (10), wobei die Gebereinheit (10) einen Bremshebel (2) und ein Zylindergehäuse (3) mit einem Zylinderraum (13) und eine in dem Zylinderraum (13) verschiebbar aufgenommene Kolbeneinheit (4) aufweist, wobei der Bremshebel (2) mittels einer Betätigungsmechanik (7) mit der Kolbeneinheit (4) wirkverbunden ist, wobei das Zylindergehäuse (3) ein hebelseitiges Ende (73) und ein nehmerseitiges Ende (83) aufweist und wobei an dem hebelseitigen Ende (73) eine Verbindungsöffnung (43) ausgebildet ist, durch welche sich die Betätigungsmechanik (7) in den Zylinderraum (13) zur Kolbeneinheit (4) erstreckt,
**dadurch gekennzeichnet,**
**dass** an dem nehmerseitigen Ende (83) eine Anschlussöffnung (93) zum Koppeln einer mit der Nehmereinheit (200) fluidisch verbindbaren Leitungseinrichtung (201) ausgebildet ist, und dass die Kolbeneinheit (4) durch die Anschlussöffnung (93) in den Zylinderraum (13) eingesetzt wird.

21. Verfahren nach dem vorhergehenden Anspruch, wobei die Verbindungsöffnung (43) mittels Materialabtrag von einer quer zu einer Längsachse des Zylinderraums (13) verlaufenden Stützwand (33) hergestellt wird.

22. Verfahren nach einem der Ansprüche 20 bis 21, wobei ein Pleuel (17) mit einer Pleuelstange (170) und einem Pleuelkopf (171) zeitlich vor der Kolbeneinheit (4) durch die Anschlussöffnung (93) eingesetzt wird und wobei die so eingesetzte Pleuelstange (171) durch die Verbindungsöffnung (43) aus dem Zylinderraum (13) wieder herausgeführt wird, während der Pleuelkopf (171) im Zylinderraum (13) verbleibt.

23. Verfahren nach einem der Ansprüche 20 bis 22, wobei der Zylinderraum (13) mittels Materialabtrag von einem Basiskörper (20) der Gebereinheit (10) hergestellt wird und wobei der Materialabtrag von dem nehmerseitigen Ende (83) ausgehend in Richtung zum hebelseitigen Ende (73) erfolgt.

24. Verfahren nach einem der Ansprüche 20 bis 23, wobei ein Kontaktabschnitt (330) mittels Materialabtrag von der Stützwand (33) gefertigt wird und wobei der Materialabtrag vom nehmerseitigen Ende (73) aus durch die Anschlussöffnung (93) erfolgt.

25. Verfahren nach den Ansprüchen 22 und 23, wobei eine Dichtungsnut (174), welche auf einer vom Zylinderraum (13) abgewandten Seite der Verbindungsöffnung (43) angeordnet ist, mittels Materialabtrag vom Basiskörper (20) hergestellt wird und wobei der Materialabtrag von einem Aufnahmeraum (30) aus erfolgt, in welchem die Betätigungsmechanik (7) wenigstens teilweise untergebracht ist und wobei in die Dichtungsnut (174) wenigstens ein Dichtungselement (174) eingesetzt wird und wobei die Pleuelstange (170) durch das Dichtungselement (174) geführt wird.

26. Verfahren nach den Ansprüchen 23 und 24, wobei eine Ausgleichsbohrung (53) mit einem definierten Abstand (530) zum Kontaktabschnitt (330) der Stützwand (33) in den Basiskörper (20) eingearbeitet wird.

27. Verfahren nach einem der Ansprüche 20 bis 26, wobei ein Vorspannelement (34) durch die Anschlussöffnung (93) eingesetzt wird und zwischen einer Anschlusseinheit (930) und der Kolbeneinheit (4) eingespannt wird.

## Claims

1. A hydraulic brake arrangement (1) for an at least partially muscle-powered bicycle (100), comprising at least one transmitting unit (10) provided for fluid connection with a receiving unit (200), wherein the transmitting unit (10) comprises a brake lever (2) and a cylinder housing (3) with a cylinder space (13), and a piston unit (4) displaceably received in the cylinder space (13), wherein the brake lever (2) is operatively coupled with the piston unit (4) by means of an actuating mechanism (7), wherein the cylinder housing (3) comprises a lever-side end (73) and a receiver-side end (83), and wherein on the lever-side end (73), a connecting opening (43) is configured, through which the actuating mechanism (7) extends into the cylinder space (13) to the piston unit (4), wherein the connecting opening (43) is configured in a supporting wall (33) extending transverse to the longitudinal axis of the cylinder space (13) and non-detachably connected with the cylinder housing (3),
**characterized in that** on the receiver-side end (83), a connection port (93) is configured for coupling a conduction device (201) provided for fluid connection with the receiving unit (200), and that the piston unit (4) is provided to be inserted into the cylinder space (13) through the connection port (93).

2. The brake arrangement (1) according to the preceding claim, wherein the supporting wall (33) limits the movability of the piston unit (4) at the lever-side end (73), and in particular defines a rest position (44) of the piston unit (4).

3. The brake arrangement (1) according to any of the preceding claims, wherein the connection port (93) has a minimum diameter which is larger than the maximum diameter of the cross sectional geometry of the piston unit (4).

4. The brake arrangement (1) according to any of the preceding claims, wherein the connecting opening (43) has a minimum diameter which is smaller than the maximum diameter of the cross sectional geometry of the piston unit (4), so that the piston unit (4) cannot pass through the connecting opening (43).

5. The brake arrangement (1) according to any of the preceding claims, wherein the connecting opening (43) has a minimum diameter which is smaller than the maximum diameter of the cross sectional geometry of a part of the actuating mechanism (7) lying inside of the cylinder housing (3).

6. The brake arrangement (1) according to any of the preceding claims, wherein the piston unit (4) is radially enclosed in the cylinder housing (3) over its entire axial length.

7. The brake arrangement (1) according to any of the preceding claims, wherein the brake lever (2) is pivotally supported on a lever accommodation (22), and wherein the cylinder housing (3) is integrally connected with the lever accommodation (22).

8. The brake arrangement (1) according to any of the preceding claims, wherein the cylinder housing (3) is an integral component of the base body (20) of the transmitting unit (10).

9. The brake arrangement (1) according to the preceding claim, wherein the cylinder space (13) is provided by a recess in the base body (20).

10. The brake arrangement (1) according to any of the preceding claims, wherein at least one equalizing hole (53) is disposed in the cylinder housing (3), and wherein the distance (530) between the equalizing hole (530) and the supporting wall (33) is fixedly incorporated into the material of the cylinder housing (3).

11. The brake arrangement (1) according to any of the preceding claims, wherein the actuating mechanism (7) comprises at least one connecting rod device (17) with a connecting rod (170) and a connecting rod small end (171), and wherein the connecting rod (170) extends through the connecting opening (43) into the cylinder space (13), and wherein the connecting rod small end (171) is disposed in the cylinder space (13) between the supporting wall (33) and the piston unit (4).

12. The brake arrangement (1) according to the preceding claim, wherein the supporting wall (33) comprises a contact portion (330) that geometrically corresponds with the connecting rod small end (171), and wherein the contact portion (330) is configured concave and the connecting rod small end (171), convex, at least in sections.

13. The brake arrangement (1) according to any of the two preceding claims, wherein the piston unit (4) can be biased to a rest position (44) by means of a biasing member (34), and wherein the biasing member (34) urges the connecting rod small end (171) against the supporting wall (33).

14. The brake arrangement (1) according to any of the three preceding claims, wherein the connecting rod (171) is disposed outside of the cylinder space (13) in a receiving space (30) that is at least partially enclosed in the base body (20) of the transmitting unit (10).

15. The brake arrangement (1) according to any of the preceding claims, wherein the brake lever (2) is pivotally supported for pivoting around a brake lever pivot axis (12), and wherein the brake lever pivot axis (12) is disposed laterally adjacent an imaginary extension of the cylinder space (13).

16. The brake arrangement (1) according to claim 11, wherein at least one sealing member (173) is supported upstream of the connecting opening (43) on its side facing away from the cylinder space (13), and wherein the connecting rod (170) extends through the sealing member (173).

17. The brake arrangement (1) according to any of the preceding claims, wherein the connection port (93) and the connecting opening (43) and the cylinder space (13) and the piston unit (4) are disposed on a shared longitudinal axis.

18. The brake arrangement (1) according to any of the preceding claims, wherein the connection port (93) is provided to be coupled with a connecting unit (930) for linking a conduction device (201), and wherein the connecting unit (930) screws into the cylinder housing (3), and wherein the connection port (93) is narrowed by the connecting unit (930) only, so that the piston unit (4) can no longer exit out of the cylinder space (13) through the connection port (93).

19. The brake arrangement (1) according to the preceding claim, wherein the connecting unit (930) shows a support structure (931) on which a biasing member (34) is supported.

20. A method of manufacturing a hydraulic brake arrangement (1) for an at least partially muscle-powered bicycle in particular according to any of the preceding claims, comprising at least one transmitting unit (10) provided for fluid connection with a receiving unit (200), wherein the transmitting unit (10) comprises a brake lever (2) and a cylinder housing (3) with a cylinder space (13) and a piston unit (4) displaceably received in the cylinder space (13), wherein the brake lever (2) is operatively coupled with the piston unit (4) by means of an actuating mechanism (7), wherein the cylinder housing (3) comprises a lever-side end (73) and a receiver-side end (83), and wherein at the lever-side end (73), a connecting opening (43) is configured, through which the actuating mechanism (7) extends into the cylinder space (13) to the piston unit (4),
**characterized in that** at the receiver-side end (83), a connection port (93) is configured for coupling a conduction device (201) provided for fluid connection with the receiving unit (200), and that the piston unit (4) is provided to be inserted into the cylinder space (13) through the connection port (93).

21. The method according to the preceding claim, wherein the connecting opening (43) is manufactured by means of material removal from a supporting wall (33) which extends transverse to the longitudinal axis of the cylinder space (13).

22. The method according to any of the claims 20 to 21, wherein a connecting rod device (17) with a connecting rod (170) and a connecting rod small end (171) is inserted through the connection port (93) chronologically before the piston unit (4) is, and wherein the thus inserted connecting rod (171) is removed back out of the cylinder space (13) through the connecting opening (43), while the connecting rod small end (171) remains in the cylinder space (13).

23. The method according to any of the claims 20 to 22, wherein the cylinder space (13) is manufactured by means of material removal from the base body (20) of the transmitting unit (10), and wherein the material is removed from the receiver-side end (83) in the direction to the lever-side end (73).

24. The method according to any of the claims 20 to 23, wherein a contact portion (330) is manufactured by means of material removal from the supporting wall (33), and wherein the material is removed from the receiver-side end (73) through the connection port (93).

25. The method according to any of the claims 22 and 23, wherein a sealing groove (174), which is disposed on a side of the connecting opening (43) facing away from the cylinder space (13), by means of material removal from the base body (20), and wherein the material is removed from a receiving space (30), in which the actuating mechanism (7) is at least partially accommodated, and wherein at least one sealing member (174) is inserted into the sealing groove (174), and wherein the connecting rod (170) is guided through the sealing member (174).

26. The method according to any of the claims 23 and 24, wherein an equalizing hole (53) is incorporated into the base body (20) at a defined distance (530) from the contact portion (330) of the supporting wall (33).

27. The method according to any of the claims 20 to 26, wherein a biasing member (34) is inserted through the connection port (93) and is clamped between the connecting unit (930) and the piston unit (4).

## Revendications

1. Système de freinage hydraulique (1) pour une bicyclette (100) entraînée au moins partiellement par force musculaire, comprenant au moins une unité d'émetteur (10) qui peut être reliée par fluide à une unité de capteur (200), ladite unité d'émetteur (10) présentant un levier de frein (2) et un boîtier de cylindre (3) doté d'une chambre de cylindre (13), et une unité de piston (4) logée de manière coulissante dans la chambre de cylindre (13), ledit levier de frein (2) étant relié en action à l'unité de piston (4) au moyen d'un mécanisme actionneur (7), ledit boîtier de cylindre (3) présentant une extrémité côté levier (73) et une extrémité côté capteur (83), et une ouverture de raccordement (93) étant conçue à l'extrémité côté capteur (83) pour raccorder un dispositif de câbles (201), et une ouverture de liaison (43) étant conçue à l'extrémité côté levier (73), par laquelle le mécanisme actionneur (7) s'étend dans la chambre du cylindre (13) jusqu'à l'unité de piston (4),
**caractérisé en ce**
**que** l'ouverture de liaison (43) est conçue dans une paroi d'appui (33) perpendiculaire à un axe longitudinal de la chambre de cylindre (13) et reliée de manière indissociable au boîtier de cylindre (3), et que l'unité de piston (4) peut être mise en oeuvre dans la chambre de cylindre (13) en passant par l'ouverture de raccordement (93).

2. Système de freinage (1) selon la revendication précédente, la paroi d'appui (33) limitant la mobilité de l'unité de piston (4) à l'extrémité côté levier (73), et déterminant notamment une position de repos (44) de l'unité de piston (4).

3. Système de freinage (1) selon l'une quelconque des revendications précédentes, l'ouverture de raccordement (93) présentant un diamètre minimum supérieur à un diamètre maximum d'une géométrie de section de l'unité de piston (4).

4. Système de freinage (1) selon l'une quelconque des revendications précédentes, l'ouverture de liaison (43) présentant un diamètre minimum inférieur à un diamètre maximum d'une géométrie de section de l'unité de piston (4), de sorte que l'unité de piston (4) ne peut pas pénétrer au travers de l'ouverture de liaison (43).

5. Système de freinage (1) selon l'une quelconque des revendications précédentes, l'ouverture de liaison (43) présentant un diamètre minimum inférieur à un diamètre maximum d'une géométrie de section d'une pièce du mécanisme actionneur (7) présent au sein du boîtier de cylindre (3).

6. Système de freinage (1) selon l'une quelconque des revendications précédentes, l'unité de piston (4) étant entourée de manière radiale par le boîtier de cylindre (3) sur toute sa longueur axiale.

7. Système de freinage (1) selon l'une quelconque des revendications précédentes, le levier de frein (2) étant agencé articulable sur un logement de levier (22), et le boîtier de cylindre (3) étant relié d'un seul tenant au logement de levier (22).

8. Système de freinage (1) selon l'une quelconque des revendications précédentes, le boîtier de cylindre (3) étant pièce intégrante d'un corps de base (20) de l'unité d'émetteur (10).

9. Système de freinage (1) selon l'une quelconque des revendications précédentes, la chambre de cylindre (13) étant réalisée par un évidement dans le corps de base (20).

10. Système de freinage (1) selon l'une quelconque des revendications précédentes, au moins un alésage de compensation (53) étant agencé dans le boîtier de cylindre (3), et un écart (530) entre ledit alésage de compensation (530) et la paroi d'appui (33) étant usiné de manière fixe dans un matériau du boîtier de cylindre (3).

11. Système de freinage (1) selon l'une quelconque des revendications précédentes, le mécanisme actionneur (7) comprenant au moins une bielle (17) dotée d'un manche de bielle (170) et d'une tête de bielle (171), et ledit manche de bielle (170) s'étendant au travers de l'ouverture de liaison (43) jusque dans la chambre du cylindre (13), et la tête de bielle (171) étant agencée dans la chambre de cylindre (13) entre la paroi d'appui (33) et l'unité de piston (4).

12. Système de freinage (1) selon la revendication précédente, la paroi d'appui (33) présentant une portion de contact (330) correspondant de manière géométrique à la tête de bielle (171), et la portion de contact (330) étant réalisée concave et la tête de bielle (171) au moins partiellement convexe.

13. Système de freinage (1) selon l'une quelconque des deux revendications précédentes, l'unité de piston (4) pouvant être précontrainte au moyen d'un élément de précontrainte (34) dans une position de repos (44), et ledit élément de précontrainte (34) appuyant la tête de bielle (171) contre la paroi d'appui (33).

14. Système de freinage (1) selon l'une quelconque des trois revendications précédentes, le manche de bielle (171) étant agencé à l'extérieur de la chambre du cylindre (13) dans une cellule de réception (30) entourée au moins partiellement d'un corps de base (20) de l'unité d'émetteur (10).

15. Système de freinage (1) selon l'une quelconque des revendications précédentes, le levier de frein (2) étant agencé articulable autour d'un axe de pivotement de levier de frein (12), et ledit axe de pivotement du levier de frein (12) étant agencé latéralement à côté d'un prolongement imaginaire de la chambre du cylindre (13).

16. Système de freinage (1) selon l'une quelconque des revendications précédentes, au moins un élément d'étanchéité (173) étant disposé en amont de l'ouverture de liaison (43) sur son côté opposé à la chambre du cylindre (13), et le manche de bielle (170) s'étendant au travers dudit élément d'étanchéité (173).

17. Système de freinage (1) selon l'une quelconque des revendications précédentes, l'ouverture de raccordement (93) et l'ouverture de liaison (43), la chambre de cylindre (13) et l'unité de piston (4) étant agencées sur un axe longitudinale commun.

18. Système de freinage (1) selon l'une quelconque des revendications précédentes, l'ouverture de raccordement (93) pouvant être couplée à une unité de raccordement (930) pour raccorder un dispositif de câbles (201), et l'unité de raccordement (930) pouvant être vissée dans le boîtier de cylindre (3), et l'ouverture de raccordement (93) étant rétrécie seulement par l'unité de raccordement (930) de telle sorte que l'unité de piston (4) ne peut plus ressortir de la chambre du cylindre (13) par l'ouverture de raccordement (93).

19. Système de freinage (1) selon la revendication précédente, l'unité de raccordement (930) présentant un revers de protection (931) sur lequel s'appuie un élément de précontrainte (34).

20. Procédé de fabrication d'un système de freinage hydraulique (1) pour une bicyclette (100) entraînée au moins partiellement par force musculaire selon l'une quelconque des revendications précédentes, comprenant au moins une unité d'émetteur (10) qui peut être reliée par fluide à une unité de capteur (200), ladite unité d'émetteur (10) présentant un levier de frein (2) et un boîtier de cylindre (3) doté d'une chambre de cylindre (13), et une unité de piston (4) logée de manière coulissante dans la chambre de cylindre (13), ledit levier de frein (2) étant relié en action à l'unité de piston (4) au moyen d'un mécanisme actionneur (7), ledit boîtier de cylindre (3) présentant une extrémité côté levier (73) et une extrémité côté capteur (83), et une ouverture de raccordement (93) étant conçue à l'extrémité côté capteur (83) pour raccorder un dispositif de câbles (201), et une ouverture de liaison (43) étant conçue à l'extrémité côté levier (73), par laquelle le mécanisme actionneur (7) s'étend dans la chambre du cylindre (13) jusqu'à l'unité de piston (4),
**caractérisé en ce**
**que** l'unité de piston (4) peut être mise en oeuvre dans la chambre de cylindre (13) en passant par l'ouverture de raccordement (93).

21. Procédé selon la revendication précédente, l'ouverture de liaison (43) étant réalisée par enlèvement de matière à partir d'une paroi d'appui (33) s'étendant perpendiculairement à un axe longitudinal de la chambre de cylindre (13).

22. Procédé selon l'une quelconque des revendications précédentes, la bielle (17) dotée du manche de bielle (170) et de la tête de bielle (171) étant mise en oeuvre dans le temps avant l'unité de piston (4) au travers de l'ouverture de raccordement (93), et le manche de bielle (171) mise en oeuvre de la telle manière au travers de l'ouverture de liaison (43) est reconduite vers l'extérieur de la chambre du cylindre (13) tandis que la tête de bielle (170) reste dans la chambre du cylindre (13).

23. Procédé selon l'une quelconque des revendications précédentes, la chambre du cylindre (13) étant réalisée par enlèvement de matière du corps de base (20) de l'unité d'émetteur (10), et l'enlèvement de matière s'effectuant, en partant de l'extrémité côté capteur (83) dans le sens de l'extrémité côté levier (73).

24. Procédé selon l'une quelconque des revendications précédentes, la portion de contact (330) étant réalisée par enlèvement de matière de la paroi d'appui (33), et l'enlèvement de matière s'effectuant, en partant de l'extrémité côté capteur (73) au travers de l'ouverture de raccordement (93).

25. Procédé selon l'une quelconque des revendications précédentes, une rainure d'étanchéité (174) qui est agencée sur la face de l'ouverture de liaison (43) opposée à la chambre du cylindre (13), est réalisée par enlèvement de matière du corps de base (20), et ledit enlèvement de matière s'effectuant à partir d'une cellule de réception (30) dans laquelle le mécanisme actionneur (7) est logé au moins partiellement, et au moins un élément d'étanchéité (174) étant mis en oeuvre dans la rainure d'étanchéité (174), et le manche de bielle (170) étant mené au travers dudit élément d'étanchéité (174).

26. Procédé selon l'une quelconque des revendications précédentes, l'alésage de compensation (53) étant intégré dans le corps de base (20) avec un écart défini (530) par rapport à la portion de contact (330) de la paroi d'appui (33).

27. Procédé selon l'une quelconque des revendications précédentes, l'élément de précontrainte (34) étant mis en oeuvre au travers de l'ouverture de raccordement (93) et inséré entre l'unité de raccordement (930) et l'unité de piston (4).
